Europäisches Patentamt

European Patent Office

Office européen des brevets

(11) Publication number: **0 311 807 A2**

## EUROPEAN PATENT APPLICATION

(21) Application number: **88115046.0**

(51) Int. Cl.4: **G06F 15/40**

(22) Date of filing: **14.09.88**

The title of the invention has been amended (Guidelines for Examination in the EPO, A-III, 7.3).

(30) Priority: **14.09.87 JP 230020/87**

(43) Date of publication of application:
**19.04.89 Bulletin 89/16**

(84) Designated Contracting States:
**DE FR GB NL**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Izawa, Koji c/o Patent Division**
**Kabushiki Kaisha Toshiba 1-1 Shibaura**
**1-chome**
**Minato-ku Tokyo 105(JP)**
Inventor: **Takagi, Shiro c/o Patent Division**
**Kabushiki Kaisha Toshiba 1-1 Shibaura**
**1-chome**
**Minato-ku Tokyo 105(JP)**
Inventor: **Kamiyama, Tadanobu c/o Patent**
**Division**
**Kabushiki Kaisha Toshiba 1-1 Shibaura**
**1-chome**
**Minato-ku Tokyo 105(JP)**

(74) Representative: **Henkel, Feiler, Hänzel &**
**Partner**
**Möhlstrasse 37**
**D-8000 München 80(DE)**

(54) **Information processing apparatus for processing both image data and coded data.**

(57) An information processing apparatus is provided with a scanner (20) and a magnetic disc (28a) both for supplying the data to be stored, and an optical disk (19) for storing the supplied data. The scanner (20) supplies image data. The magnetic disk (28a) supplies the code data such as document data and drawing data. The processing apparatus stores the image data and the code data into the optical disk (19), while each being attended with a flat indicating a type of the data per se, image data or code data.

FIG. 1

# Information processing apparatus

The present invention related to an information processing apparatus for electronically filing documents in connection with recording medium of large memory capacity.

In recent days, offices and manufacturing factories are flooded with a tremendous number of documents containing the literal and graphic information. In the circumstances, particularly electronic engineers are now under continuous pressure of developing effective filing and retrieval apparatus. The recent documents may come in three varieties, normal literal documents and drawings as manually written or drawn and printed in a conventional manner, documents having character code data, as processed by word processors, and drawings (having vector data) as prepared by personal computers and CAD (computer aided design). The word processed data, and the graphic and pictorial data as generated with the aid of personal computers and CADs, are magnetically stored into floppy disks. Generally, the hard copy of these types of information, together with the floppy disks, are filed for preservation and reference. The hard copy is space consuming.

USP No. 4,604,653 by Shimizu, issued on August 5, 1986 discloses a document filing apparatus. The filing apparatus optically and two-dimensionally scans documents by a two-dimensional scanner, to pick up the information on the documents, and stores the data as image data into an optical disk or disks. When certain data is needed later, the intended data is quickly retrieved from the optical disk.

The Shimizu's filing apparatus can handle only the image data as read in by the scanner. In other words, a document management system employed by the filing apparatus is unable to synthetically handle both the floppy disk (FD) stored data and the optical disk stored data, because of format difference thereof. To store the FD data into an optical disk, therefore, a user must take two additional bothersome steps, to print out the FD data into a hard copy, and to read in the hard copied data by the scanner. Such steps of work is time consuming, and may make users irritative, and to an extreme would make the user sick of operating the filing apparatus.

Another information processing apparatus as document filing apparatus exists and is capable of reading out the the data from a floppy disk and storing it into the optical disk. In the processing apparatus, however, the management system for the image data cannot handle the floppy disk stored data. Therefore, when the document data and the drawing data being stored in a floppy disk is read out therefrom and stored into an optical disk, it is a common practice to drive different systems. In most case, different apparatuses have been used for the storage of such type of data into the optical disk. This storage operations by different systems or apparatuses are bothersome and intricacy particularly for some unskilled operators, the hence hinders a smooth operation of filing. Further, the necessity of using the different systems makes it impossible to synthetically manage and preserve those documents including drawings.

For the above background reasons, there is an eager expectancy of the advent of the information processing apparatus capable of synthetically handling and managing both types of the data, the floppy disk stored data and the optical disk stored data.

Accordingly, an object of this invention is to provide an information processing apparatus in which the FD stored data of document and drawing are handled, like the paper document and drawings, and both types of data are synthetically managed.

According to one aspect of this invention, there is provided an information processing apparatus for processing both image data and code data, the apparatus comprising first storing means for storing at least one of the image data and the code data, and second storing means for storing first retrieval data for retrieving the image data from the first storing means and second retrieval data for retrieving the code data from the first storing means, the first retrieval data having a data structure for defining the retrieval data and first identifying data representing the image data, the second retrieval data having the same data structure as the data structure of the first retrieval data and second identifying data representing the code data.

According to another aspect of this invention, there is provided an information processing apparatus comprising first input means for inputting image data, second input means for inputting code data, means for storing at least one of the image data input by the first input means and the code data input by the second input means, means for preparing flag data indicating the image and code data input by one of the first and second input means, and control means for making such a control as to store into the storing means either of the image data and the code data input by the first output means and the second input means, attendant with the flag data prepared by the preparing means, the same data structure being applied to both the image data and the code data.

According to still another aspect of this invention, there is provided an information processing apparatus for processing both image data and code data, the apparatus comprising first storing means for storing at least one of the image data and the code data, second storing means for storing first retrieval data for retrieving the image data from the first storing means and second retrieval data for retrieving the code data from the first storing means, the first retrieval data having data structure for defining the retrieval data and the second retrieval data having the same data structure as the data structure of the first retrieval data, means for inputting at least one of the first retrieval data and the second retrieval data, and means for retrieving at least one of the image data and the code data from the first storing means, the retrieving means having first means for retrieving the retrieval data input by the inputting means from the second storing means and second means for retrieving at least one of the image data and the code data corresponding to the retrieval data retrieved by the first means from the first storing means.

This invention can be more fully understood from the following detailed description when taken in conjunction with the accompanying drawings, in which:

Fig. 1 shows a block diagram of an information processing apparatus according to an embodiment of the present invention;

Fig. 2 shows a view for schematically explaining a document management system employed in the above embodiment;

Fig. 3 shows a functional block diagram for explaining the structure of a control program or software used in the above embodiment;

Fig. 4 shows a functional block diagram showing a configuration of a FDR/W processing module of Fig. 3;

Fig. 5 shows a format of the data employed by the above software;

Fig. 6 shows a format of a main header;

Fig. 7 shows a format of an image header;

Fig. 8 shows a format of a volume data header;

Fig. 9 shows a format of a file data header;

Fig. 10 shows a memory map of a main memory including module management data area, header management data area, and data header part area;

Fig. 11 shows a flow chart useful in explaining an overall flow in the data registration processing;

Fig. 12 shows a flow chart useful in explaining an overall flow in the data retrieval processing;

Figs. 13 to 15 show displays used for FD read-in processing;

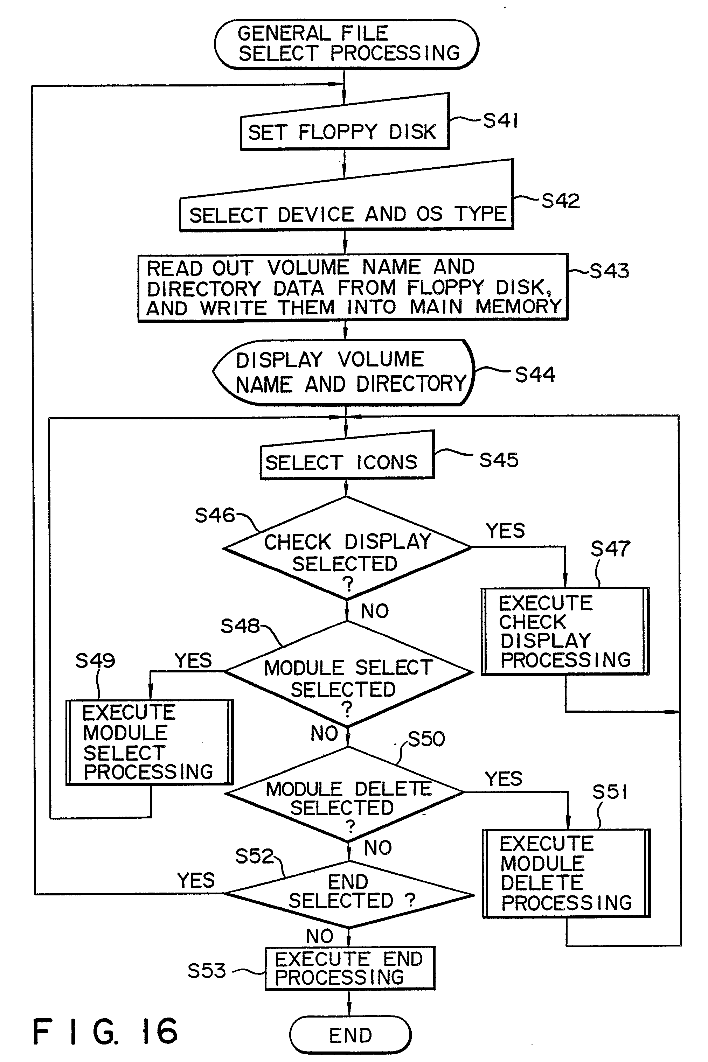

Figs. 16 to 20 show flow charts useful in explaining a flow in FD read-in processing;

Figs. 21 to 24 show flow charts useful in explaining a flow in FD write-in processing;

Figs. 25 and 26 show displays used for FD write-in processing;

Fig. 27 shows a flow chart for explaining a flow in the registration of specific application files;

Figs. 28 to 30 show property sheets used in the specific file select processing;

Figs. 31 to 33 show schematic diagrams for explaining comparative verification functions for code data check;

Fig. 34 shows a flow chart for explaining a control flow in the retrieval processing for the specific application files;

Fig. 35 shows a display containing error message;

Fig. 36 shows a display used for the specific application file output processing;

Fig. 37 shows a display for foreign characters registration;

Fig. 38 shows a flow chart for explaining the page change processing; and

Fig. 39 shows a flow chart for explaining test page change.

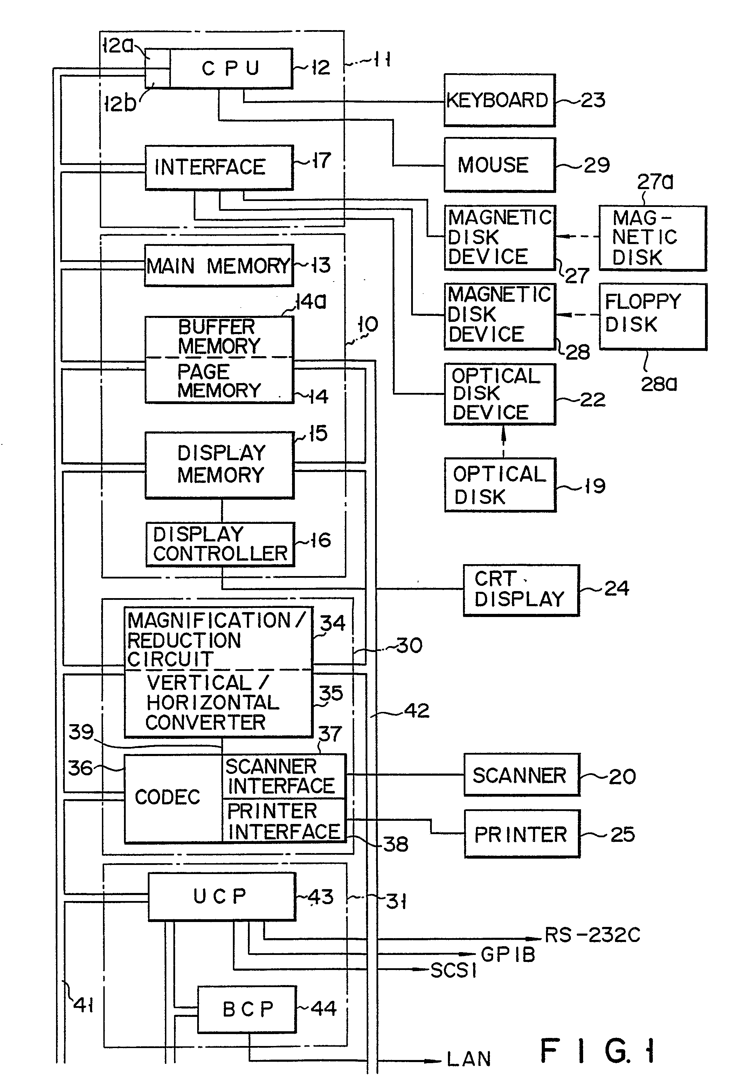

A hardware configuration of an information processing apparatus according to an embodiment of this invention will be described referring to Fig. 1. As is shown, the processing apparatus is comprised of control module 11, memory module 10, image processing module 30, communication control module 31, scanner 20, optical disk device 22, keyboard 23, CRT display device 24, printer 25, magnetic disk device 27, another magnetic disk device 28, mouse 29, system bus 41, and image bus 42.

The control module 11 is made up of CPU (central processing unit) 12 for executing various controls of the filing apparatus, and interface circuit 17 allowing a bidirectional communication between this CPU 12 and external devices, such as optical disk device 22, and magnetic disk devices 27 and 28. CPU 12 is coupled with keyboard 23 and mouse 29.

The memory module 10 is made up of main memory 13, page memory 14, display memory 15, and display controller 16. The display memory 15 and display controller 16 serves as a display interface. The page memory 14 has a memory capacity capable of storing image data amounting to several pages of A4-size documents. Page memory 14 is partially occupied by buffer memory area 14a. Data read/write for buffer memory area 14a is controlled by a counter (not shown).

The image processing module 30 is made up of magnification/reduction circuit 34, vertical/horizontal converter 35, compressor/expander (CODEC) 36, scanner interface 37 for scanner 20, printer interface 38 for printer 25, and internal bus 39. Magnification/reduction circuit 34 is for magnifying and reducing the size of a picture based on image data. Vertical/horizontal converter 35 is for rotating the picture by image data through the coordinate transformation. CODEC 36 is for compressing image data for redundancy reduction, and expanding for restoring the compressed signal into the original signal. Internal bus 39 interconnects a group of magnification/reduction circuit 34 and vertical/horizontal converter 35 with another group of CODEC 36, scanner interface 37, and printer interface 38.

Communication control module 31 is made up of UCP (universal communication processor) 43 and BCP (bus communication processor) 44. UCP 43 is connected to external devices such as FCP (facsimile communication processor) and personal computers, by way of an interface means such as RS-232C, GPIB and SCSI. BCP 44 is coupled with LAN (local area network).

CPU 12 is provided with vector/raster converter 12a and code/image converter 12b. Vector/raster converter 12a converts vector data as drawing data as derived from floppy disk 28a to be given later, into raster data as image data. Code/image converter 12b converts code data as document data as read out of floppy disk 28a, into image data. The vector-to-raster and code-to-image data conversions may be executed in a software manner, if necessary.

System bus 41 as a path for control signals interconnects control module 11, memory module 10, image processing module 30, and communication control module 31. Image bus 42 as a path for image data interconnects memory module 10 and image processing module 30.

Display memory 15 stores the image data as actually displayed in the windows of CRT display 24, viz., the image data as obtained after the image data of page memory 14 is subjected various types of processings such as magnification, reduction, rotation, insertion, and inversion.

Scanner 20, for example, a two-dimensional scanner, two dimensionally scans a document by a laser beam, and collects the image data on the document, and outputs them in terms of electrical signal.

Magnetic disk device 28 is a floppy disk device using floppy disk 28a of 5.25 inches. The disk device reads out from floppy disk 28a the text files (document data) prepared by word processors (not shown), and the code data files such as CAD drawing files and work sheet files (drawing data) as prepared by personal computers. Floppy disks 28a prepared on the basis of many OSs (operating systems) is adaptably available.

Optical disk device 22 sequentially stores into optical disk 19 the image data as read out by scanner 20 and the code data as read out by magnetic disk device 28.

Keyboard 23 enters the retrieval codes respectively assigned to the code data and the image data to be stored into optical disk 19, and various commands for operations.

CRT display device 24 as one of the output devices uses a cathode ray tube as a visual presenting means. The display device displays the image data from scanner 20, the code data read out by magnetic disk device 28, and the code data and image data as read out by optical disk device 22. Further, the display device is capable of displaying the entire documents by means of a maximum of four display windows. For example, four documents can concurrently be displayed, while those being arrayed vertically. Various editing words, such as magnification, reduction, rotation, and scroll may be conducted in each window independently of other windows.

Printer 25 prints out in the form of hard copy, various data, such the image data from scanner 20, the code data read out by magnetic disk device 28, and the code data and image data as read out by optical disk device 22, and the image data being displayed by display device 24.

Magnetic disk device 27 is a hard disk device with magnetic disk 27a. Magnetic disk 27a stores various types of control programs, retrieval codes entered from keyboard 23, and retrieval data (management data) corresponding to each retrieval code. The retrieval data includes memory addresses and data size of the code data and/or the image data representing one document which are stored in optical disk 19 with the retrieval codes assigned, and a flag to indicate the type of data, code data and image data. The one document code data and/or image data is stored into a retrieval data area of optical disk 19. The addresses used are logic addresses, and therefore when accessed, the physical track address and physical sector address in the optical disk is calculated for each address.

Mouse 29 is a pointing device. The device is used to selectively point out a desired item of edition on the screen by moving vertically and/or horizontally a cursor on the screen. The edition items are displayed in a fixed location on the display screen, and includes various modes, edited image, range of cutting and merging of images, icon, and the like.

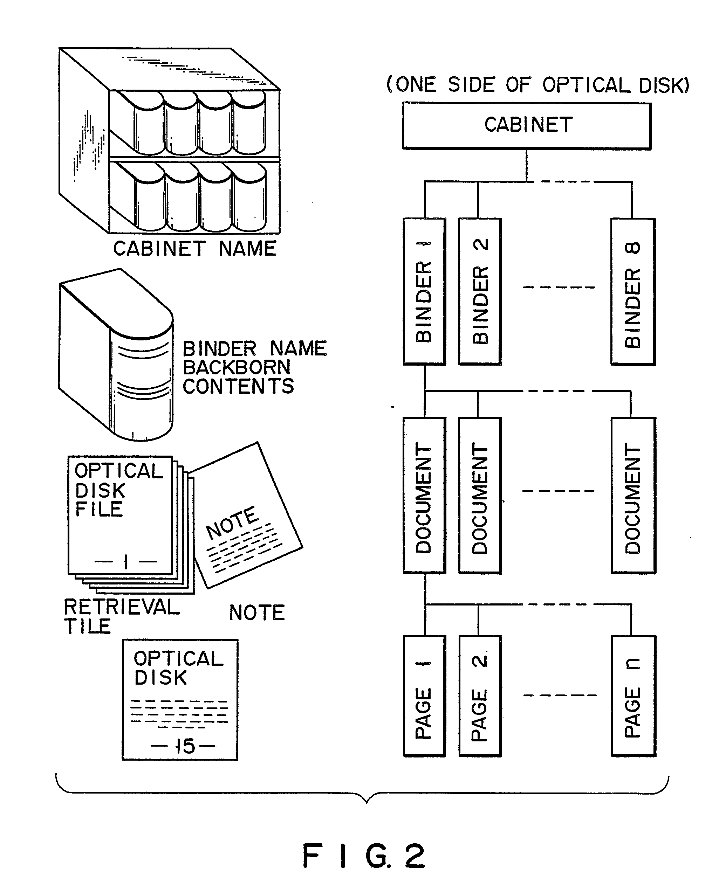

How the image data and the code data are synthetically managed will be described referring to Fig. 2, from the viewpoint of the document management.

A document management system in this instance, illustrated in Fig. 2, includes data hierarchy has four strata; cabinet, binder, document, and page. The cabinet is made to correspond to one side of optical disk 19. The cabinet may be defined by a maximum of eight binders. Each binder may contain a maximum of 30,000 documents. A title is assigned to each document. The structure of the titles is defined each binder. One document is treated as a fundamental unit of a file. "Note" as an explanation for document may be added to the document, in addition to the title. The document includes a maximum of 4095 pages.

The above document management system is structured so as to well match with the paper filing system. The page corresponds to one paper file. The document management system is so designed to manage the code data in the level of the page. Specifically, the page corresponds to the image data of one sheet of paper, the data oefone sheet of floppy disk (volume data), the data of one file, or the data by merging the above three types of data. The document management system can synthetically and smartly manage the code data and image data, which must be separately managed by the conventional filing apparatus. For example, within one document, a source file group (code data) of a given program is assigned to a first page, a program specification (code data) prepared by a word processor, to a second page, the results of processing (image data) to a third page.

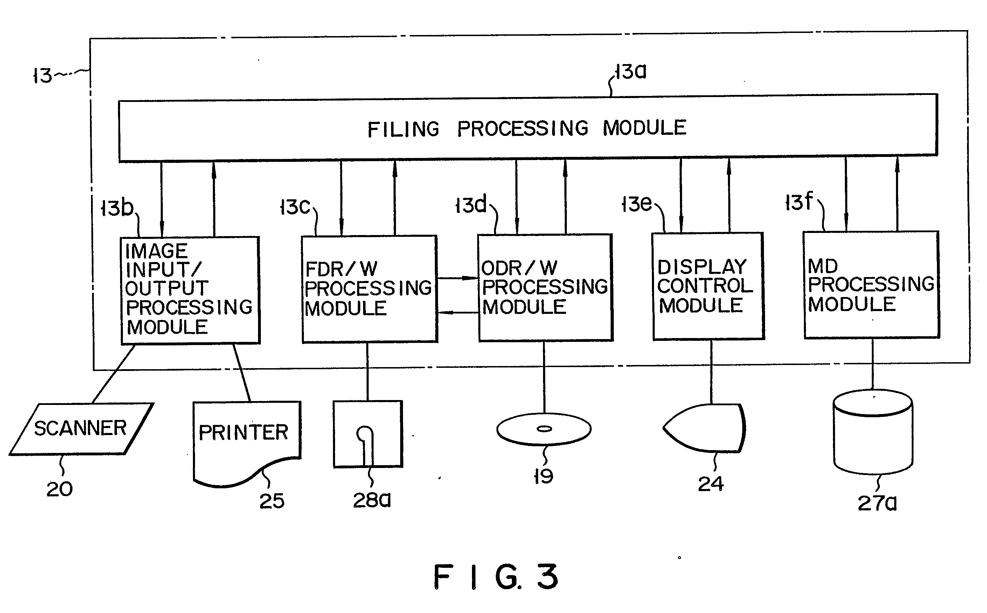

A control program stored in main memory 13, viz., the structure of a software used in the filing apparatus will be described referring to Fig. 3.

The software is made up of six modules, image input/output processing module 13b, floppy disk read/write (FDR/W) processing module 13c, optical disk read/write (ODR/W) processing module 13d, display control module 13e, magnetic disk (MD) processing module 13f, and filing processing module 13a for controlling all the above modules.

A control flow in filing processing module 13a in a registration mode will be described.

To start with, an operator checks if the data to be registered is the image data or the data from floppy disk, and enters the check result for filing processing module 13a. After entering the title, when the data to be registered is the image data, image input/output processing module 13b is called, so that the image data is transferred from scanner 20 to the module 13b. Then, display control module 13e is called, and he checks the image data on CRT display 24. Following this, ODR/W processing module 13d is called, and the input image data is compressed, and recorded into optical disk 19. After calling MD processing module 13f, the address in optical disk 19, together with the input title data, is registered into magnetic disk 27a.

To register the data into a floppy disk, FDR/W processing module 13c is called. The designation and processing of the registered data, i.e., volume data, general files, or specific application files, are executed within FDR/W processing module 13c. Therefore, filing processing module 13a can be indifferent to these operations.

Within FDR/W processing module 13c, necessary data is read out from floppy disk 28a in response to a command entered by an operator, and is set up in a predetermined format in page memory 14. Filing processing module 13a calls the top address of the data and data length, and ODR/W processing module 13d, and records the data set up in page memory 14, into optical disk 19. When the data read out from floppy disk 28a cannot be stored at one time into page memory 14, filing processing module 13a repeats to call FDR/W processing module 13c and ODR/W processing module 13d. Upon completion of the registration, filing processing module 13a calls MD processing module 13f, and records the address in optical disk 19, together with the input title data, into magnetic disk 28a, as in the mode of registering the image data.

A control flow of filing processing module 13a in a retrieval mode will be described.

An operator enters a retrieval formula containing a retrieval key and a key word for retrieval. The retrieval processing is executed by MD processing module 13f. The result of the retrieval is displayed by CRT display device 24. Upon designation of a document to be retrieval by the operator, filing processing module 13a outputs a retrieval request command to ODR/W processing module 13d. ODR/W processing module 13d checks the kind flag referring to a data header part to be given later. When the flag indicates image data, the module 13a applies the compressing processing to the data, and loads it into page memory 14. When the retrieved data is code data, the data is intactly loaded into page memory 14.

When the operator requests the display of the retrieved result, the module 13a checks if display of the retrieved data is possible or not, referring to the flag. If the display is possible, the module 13a calls display control module 13e. Under control of the called display control module 13e, CRT display device 24 displays that data. If impossible, an error message is output.

The called display control module 13e executes the processing for the retrieved data, image data, or the code data, and causes CRT display device 24 to display it on the display screen. When an operator requests the storage of the retrieved data into floppy disk 28a, FDR/W processing module 13c is called, and it writes the retrieved data into the floppy disk. In this case, the entry of the file name in connection with the data writing is executed by FDR/W processing module 13c. Therefore, filing processing module 13a may be indifferent to the file name entry.

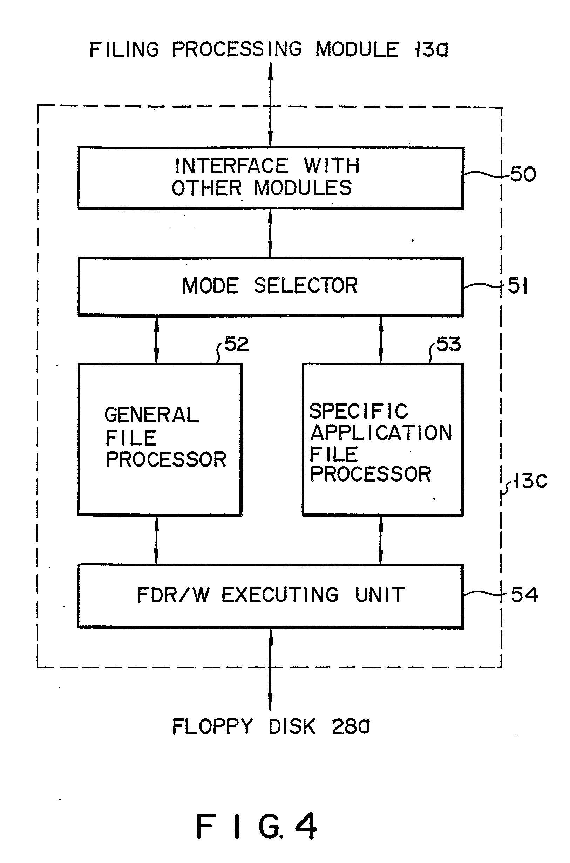

FDR/W processing module 13c is configured as is shown in Fig. 4. This module 13c is made up of interface 50 for other modules, mode selector 51 for selecting either of the general file or the specific application file, general file processor 52, specific application file processor 53, and FDR/W executing unit 54.

FDR/W processing module 13c is called from filing processing module 13a. FDR/W processing module 13c executes the processing for reading out the code data from floppy disk 28a and writing it into page memory 14, and the processing for reading out the code data from paper memory 14, and writing it into floppy disk 28a. For the former operation, FDR/W processing module 13c is called by filing processing module 13a in a registration mode. For the later operation, it is called by the same in a retrieval mode. The above processings include the operations to attach the data header part to the data, and to interpret the same.

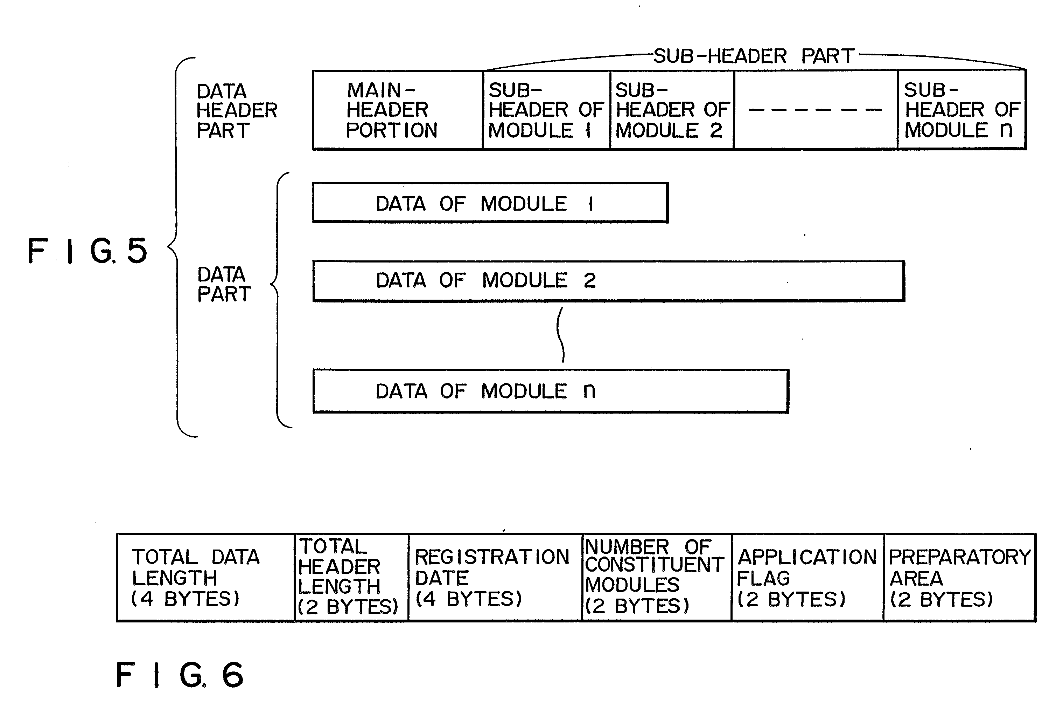

The formats of the code data and image data to be stored in optical disk 19 will be described referring to Figs. 5 through 9.

In this instance, the format of optical disk 19 will be described in connection with floppy disk 28a of 5.25 inches and a specific OS file. If necessary, however, it is adaptable for other types of floppy disks of 8 inches and 3.5 inches, and a magnetic disk or a magnetic tape, and other OS files.

As is shown in Fig. 5, the data of one page for optical disk 19 includes a data header part and a data part. The data part stores the data of modules 1 to n. If the data of one page contains a work sheet data file, a drawing data file (net file), and an image expanded picture (plotter file), the number of modules in this data is "3". The data header part is made up of a main header portion and a sub-header part representing a format of data. The main header portion, as is shown in Fig. 6, further includes total data length (4 bytes), total header length (2 bytes), registration date (4 bytes), number of constituent modules (2 bytes), specific application flag (2 bytes), and preparatory area (2 bytes), and has the length of a total of 16 bytes. The specific application comes in two varieties, a document management application and a drawing data management application. The document management application is for filing the document data prepared by a word processor. The drawing data management application is for filing the drawing data (CAD) by a personal computer. The application flag of the main header portion is used for indicating the document management application or the drawing data management application.

As for drawing data, a plurality of files are generated for each drawing. In this instance, these files are a work sheet file, a net file, and a plotter file. The work sheet file is generated by an operator when he prepares the CAD. The net file describes relative positions and connections of parts in the drawing. The plotter file (vector file) describes the above matters of parts in the format to operate printers and plotters. Under the drawing management application, these related files are systematically combined into one page, and are stored into the optical disk for their management. The drawing data thus managed may provide effective and smooth filing and retrieval operations. Thus, the design drawings, together with the information of the used parts, are filed and managed. In later use, users may retrieve the drawings and their related information of parts simultaneously.

As also for the document data, a plurality of files, such as a document file and a foreign character file in which foreign characters are registered for each document. Under the document management application, these related files are systematically combined into one page, and are stored into the optical disk for their management. The document data thus managed may provide effective and smooth filing and retrieval operations.

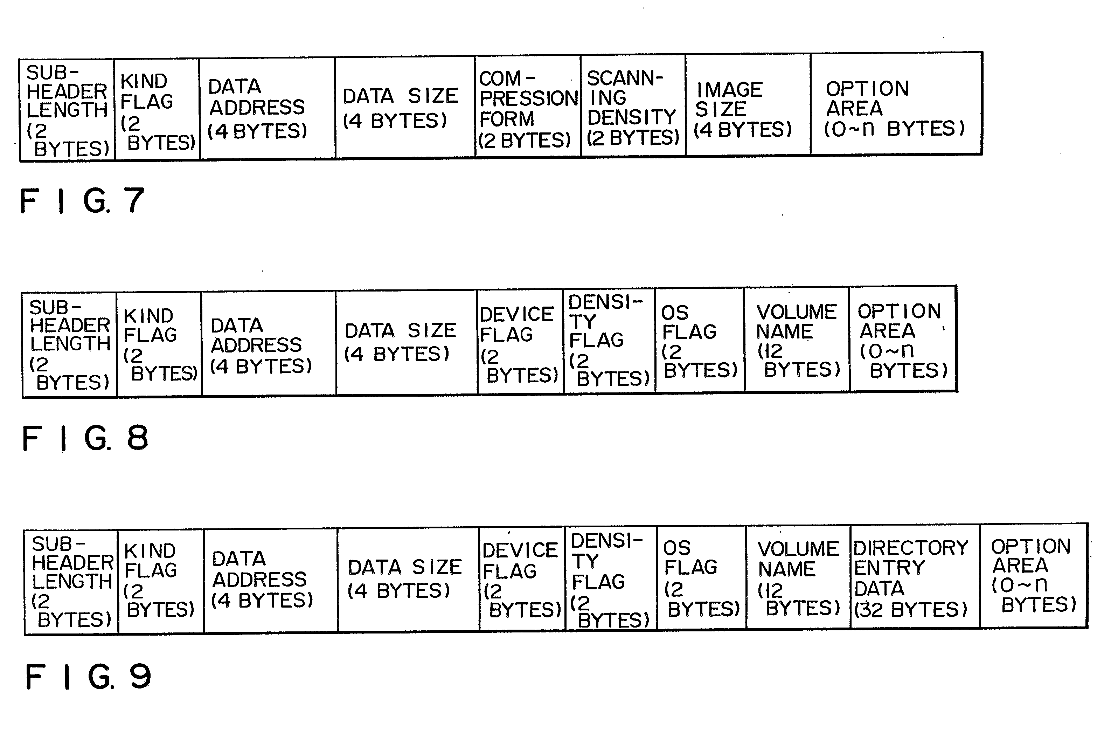

The sub-header part, as is shown in Fig. 5, is made up of several sub-headers whose number is determined by the number of constituent modules in the main header portion. The sub-header comes into three varieties, image data header, volume data header, and file data header. The image data header, as is shown in Fig. 7, includes sub-header length (2 bytes), kind flag (2 bytes), data address (4 bytes), data size (4 bytes), compression form (2 bytes: MH; MR; etc.), scanning density (2 bytes: 200 dpi; 300 dpi; etc.), image size (4 bytes: A4; B3; A3; etc.), and option area (0 to n bytes). The volume data header, as is shown in Fig. 8, includes sub-header length (2 bytes), kind flag (2 bytes), data address (4 bytes), data size (4 bytes), device flag (2 bytes), density flag (2 bytes), OS flag (2 bytes), volume name (12 bytes), and option area (0 to n bytes). The file data header, as is shown in Fig. 9, includes sub-header length (2 bytes), kind flag (2 bytes), data address (4 bytes), data size (4 bytes), device flag (2 bytes), density flag (2 bytes), OS flag (2 bytes), volume name (12 bytes), directly entry data (32 bytes), and option area (0 to n bytes).

The kind flag is used for indicating image data, volume data (data stored in the whole FD), or OS file data. The most significant bit of the kind flag indicates if the data can be expanded into the image data, that is, if it is an image expandable flag. More specifically, for the image data and document data, this flag is set. For the object code data such as a execution file of a software program, it is not set. The data address indicates the address of the data in the optical disk. The data size indicates the size of the stored data.

The device flag indicates the type of floppy disk 28a used from which the current data is derived. In this instance, as recalled, three types of floppy disks of 5.25, 3.5, and 8 inches are available. The density flag indicates a recording density of the used floppy disk, 2DD or 2HD. When a magnetic tape is used, this flag indicates its recording density, 1600 bpi or 6250 bpi. The OS flag indicates the type of the OS used.

The option area of the volume data header may be used to record, for example, the directory table data in the volume data, i.e., all the data stored in a sheet of FD. The directly entry data area of the file data header stores, for example, a copy of the 32-byte data as stored in the current floppy disk 28a according to the used OS. The 32-byte includes file name, file size, date, etc. The format of the data is different with the OS used.

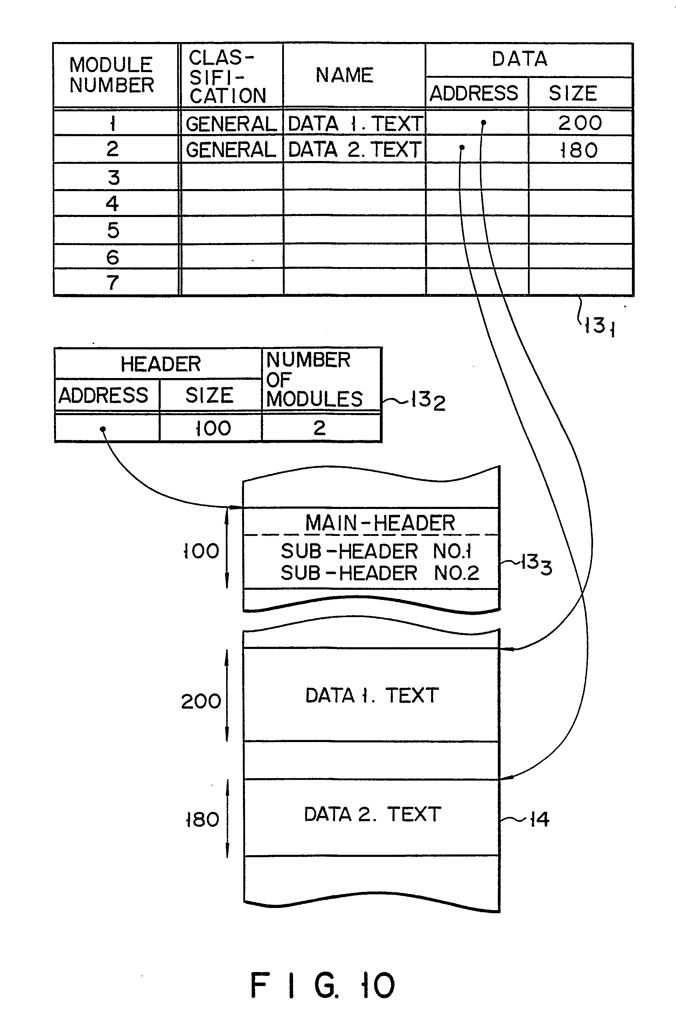

Main memory 13, as is shown in Fig. 10, generally includes three memory areas, module management data area $13_1$, header management data area $13_2$, and data header part area $13_3$. Module management data area $13_1$ stores module numbers, the classifications of files, file names, the addresses and sizes of the data stored in page memory 14, which are tabulated with those items correspondingly arranged for each module, as is shown in Fig. 10. Header management data area $13_2$ stores the number of modules currently selected, and the address and size of the data of the header part as stored in main memory 13 (exactly stored in data header part area $13_3$). Those items are arranged in a table, as is shown.

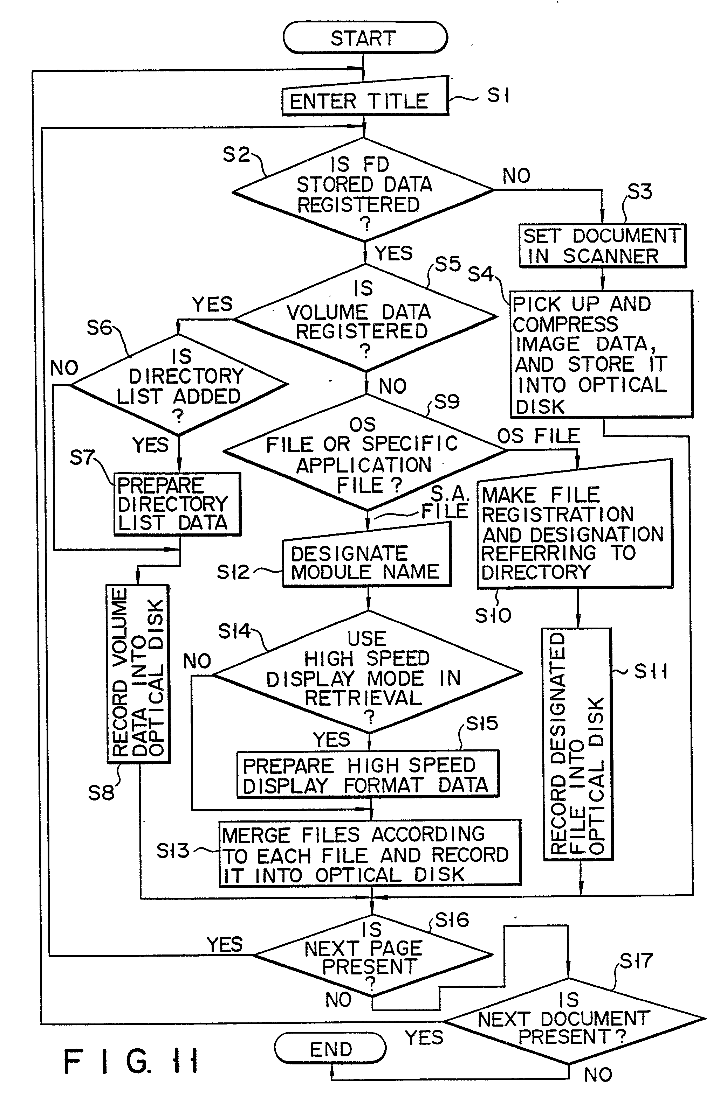

A registration processing of the information processing apparatus according to this invention will be described referring to Fig. 11. As recalled, in the document management system as referred to Fig. 2, a plurality of pages are combined into a document. A title, or retrieval code, is attached to each document. According to the document management system, a title is first entered (step S1). An operator enters, by a related key, a command indicating the type of the data to be registered, the code data from floppy disk 28a or the image data as read in by scanner 20. If it is for the image data (step S2), a document is set on scanner 20 (step S3), and is scanned by scanner 20 (step S4). In this step, the image information on the document is optically collected and the collected data is properly compressed, and finally stored into the optical disk.

If the entered command is for the code data (step S2), floppy disk 28a is set in floppy disk device (FDD) 28. The operator then enters a command indicating the type of the data, i.e., volume registration, normal OS file registration, or specific application file registration, i.e., work sheet registration or CAD or drawing data registration. If the entered command represents the volume registration (step S5), it determined if the directory list data is attached to the data header part (step S6). If the answer is YES, the directory list data is set in the option area in the sub-header (step S7). Then, the volume data is stored into optical disk 19 (step S8).

In the case of the normal OS file registration (step S9), a directory list in floppy disk 28a is displayed and a file to be registered is designated or selected (step S10). In this case, a plurality of files may be selected simultaneously. After the data header part is prepared, the designated files are sequentially stored into optical disk 19 (step S11).

To register the specific application file (step S9), the module name is designated (step S12), so that a set of files having a file name formed under a given rule is automatically searched. After the data header part is prepared, the file set is stored into optical disk 19 (step S13). When it is retrieved later, one may desire to display the retrieved data at a high speed. To meet the requirement, step S14 is provided to designate the high speed display of the retrieved data. If the high speed display is designated (step S14), the data is formatted into a data format for the high speed display (step S15). The formatted data it attached to the data to be registered. This will be described later.

If it is necessary to check the recorded data in optical disk 19, such a meaning is entered to the filing apparatus. After the data recording to optical disk 19 is completed, the information processing apparatus automatically checks the recorded data, and if error is found, records the correct data again.

When the next page must be recorded (step S16), the above sequence of steps is repeated, starting with step S2. To record the next document (step S17), the repeated sequence starts with step S1.

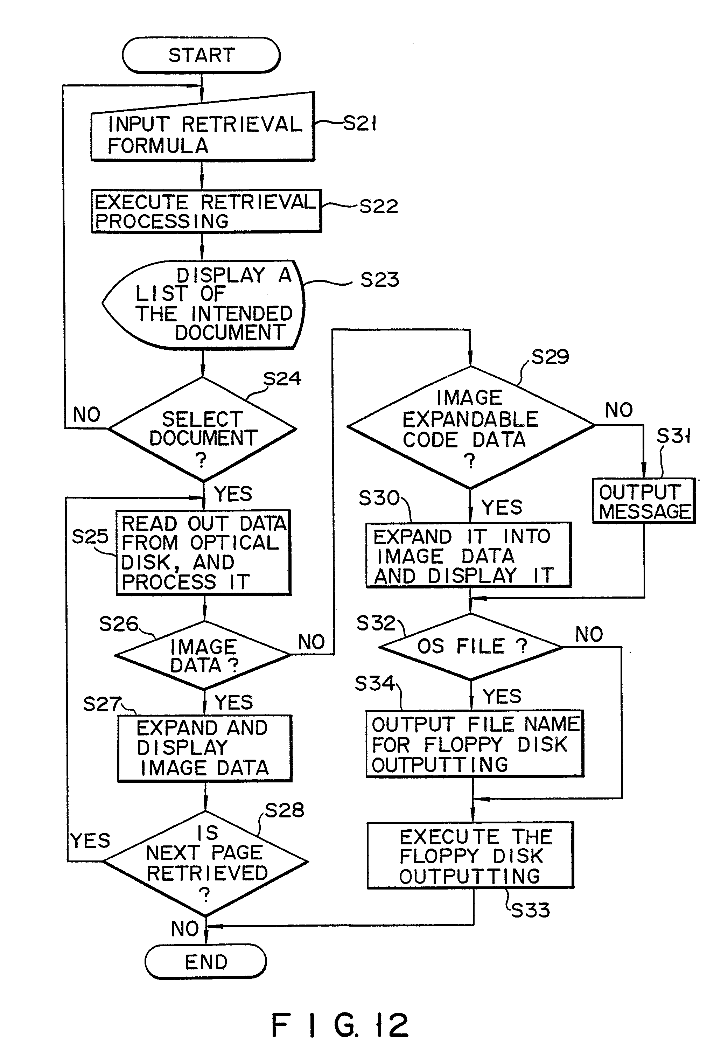

A retrieval processing will be described referring to a flowchart shown in Fig. 12.

A retrieval formula is entered (step S21). A retrieval processing is performed by using the retrieval data stored in magnetic disk 27a (step S22). A list of the related documents is displayed (step S23). If a desired document is not found (step S24), the retrieval formula is entered again (step S21). If found (steps 24), an operator selects it from the document list and directs the filing apparatus to execute the retrieval.

Then, the information processing apparatus reads out the first page data of the selected document from optical disk 19 (step S25). In step S26, check is made whether the read out data is the image data or not, referring to the kind flag in the data header part (step S26). If the answer is YES, the data is expanded and then displayed by CRT display device 24 (step S27). If the next page retrieval is needed (step S28), the sequence of the above steps is repeated from step S25.

If the decision result in step S26 is NO, control goes to step S29 to check the kind flag of the data header part. If the flag represents an image expandable code data, the code/image converter 12b converts the code data into the image data. CRT display device 24 displays the image data (step S30). If the code data is not image expandable, a message to that effect is displayed by CRT display device 24 (step S31).

Then, the data is output to floppy disk 28a. Before this outputting, control checks if the code data is of the OS type (step S32). If the answer is NO, the data is output to the whole of the floppy disk (step S33). If YES, the file name is designated (step S34), the data output is applied to that file in the floppy disk 28a (step S33).

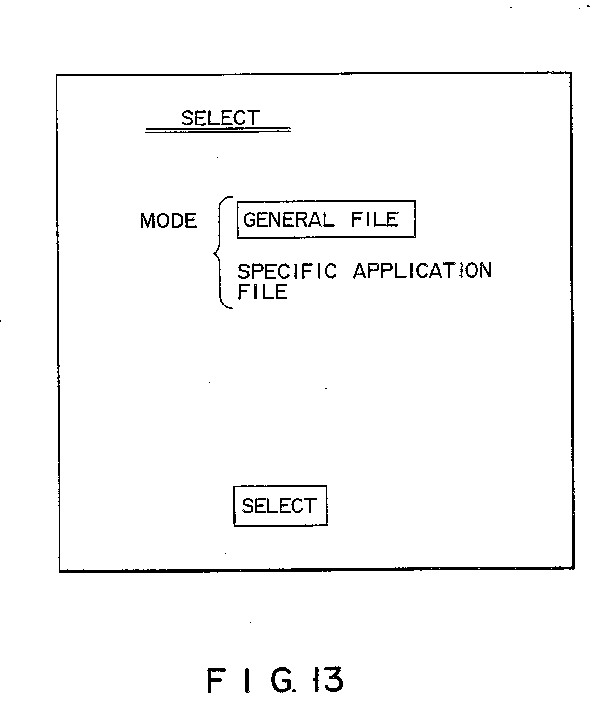

How a FD read-in processing goes in the above registration mode will be described referring to Fig. 13.

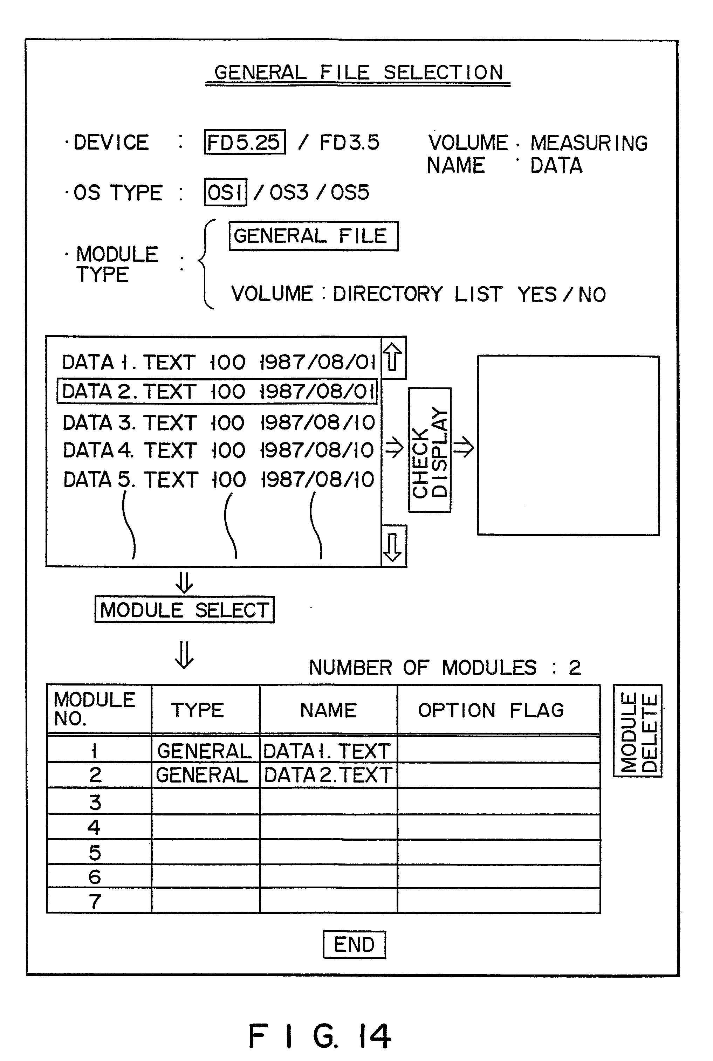

When a FD read-in processing is called from the registration processing, the information processing apparatus requests an operator to select either of a general file and a specific application file, while presenting a display for mode selection on the screen of display device 24 as is shown in Fig. 13. The operator selects a desired mode from those displayed items by mouse 29 or keyboard 23 (Fig. 1). If he selects the general file, the display is changed to a display for general file as is shown in Fig. 14. Description of the selected specific application file will be given later.

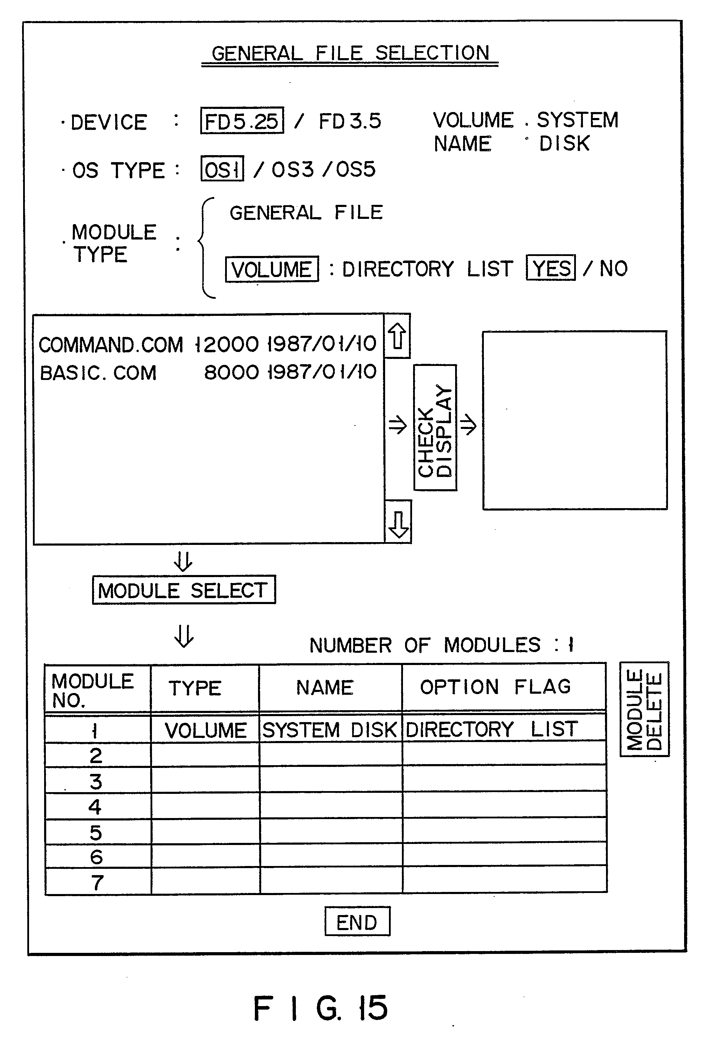

The FD read-in processing when the general file is selected, will be described referring to flow charts of Figs. 14 and 15, and displays of 16 through 20.

An operator sets floppy disk 28a loaded with data, in floppy disk device 28 (step S41). Then, he selects the type of a floppy disk to be used. To this end, he selects either of FD5.25 and FD3.5 in item [Device] on the display screen of Fig. 14, by means of keyboard 23 or mouse 29. Further, he selects the type of the OS used when the data was stored into the floppy disk (step S42). Control accesses the floppy disk 28a, and reads out the volume name and the directory list data from the floppy disk (step S43), and stores them into main memory 13 while displaying them on CRT display device 24 (step S44).

The operator selectively points out a series of directive items while seeing the display, by keyboard 23 or mouse 29 (step S45). [Module Type] including "General file" and "Volume" is first pointed out. Either "General file" or "Volume" is selected. Following this, icons [Check Display], [Module Select], and [Module Delete], or [End] are selected in this order.

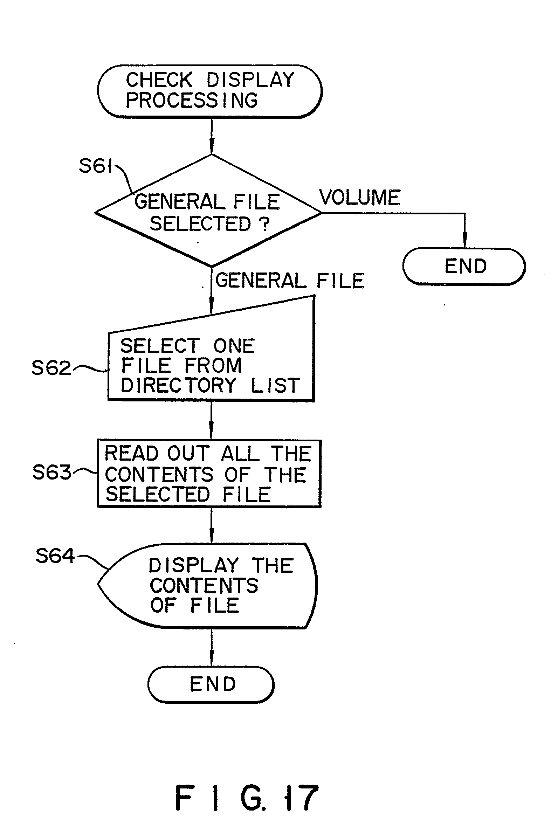

When icon [Check Display] is pointed out (step S46), a check display processing is executed (step S47). As the result of this processing, the dump data is converted into image data by code/image converter 12b, and is displayed. As is shown in a check display processing flow chart of Fig. 17, when the "General file" is selected as the type of module (step S61), an operator selects a file to be checked from the directory list (step S62). The entire data of the selected file are read out from floppy disk 28a (step S63), and are displayed by display device 24 (step S64). When "Volume" is selected (step S61), no check display processing is performed.

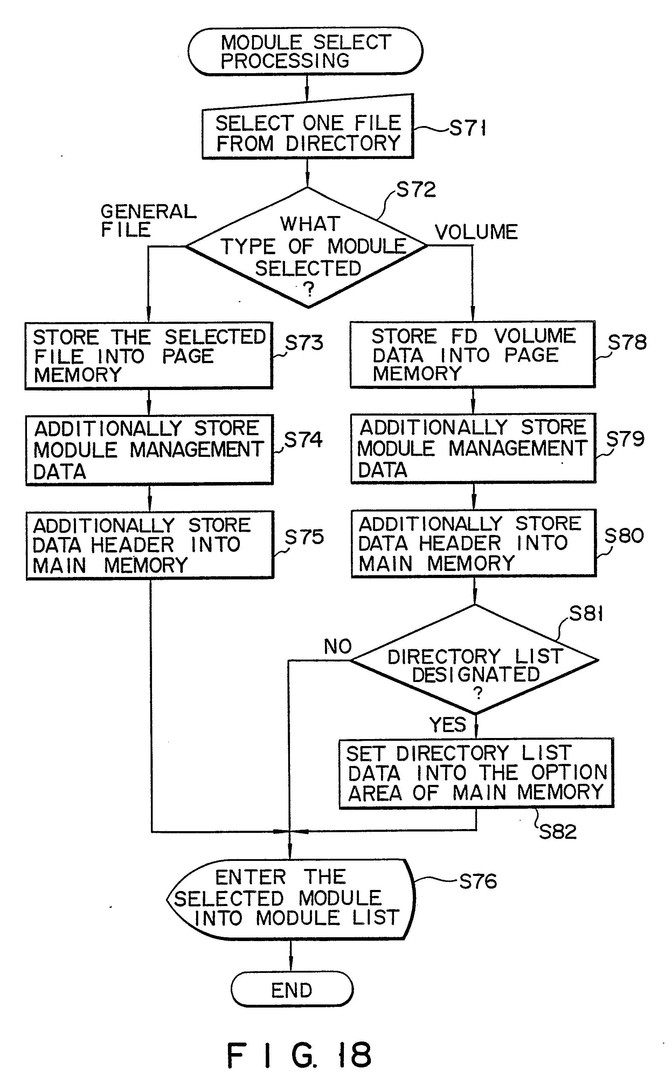

When icon [Module Select] is pointed out (step S48), the module select processing is executed (step S49). As is shown in a module select processing flow chart of Fig. 18, an operator selects one file from the displayed directory list (step S71). When the selected module type is the general file (step S72), the contents of the file bearing the file name selected are loaded into page memory 14 (step S73). The management data of that file is additionally stored into module management data area $13_1$ (step S74), and the data header is additionally stored into data header part area $13_3$ of main memory 13 (step S75). The file name is added to the module list on the display screen of display device 24, so that the number of modules is increased by one (step S76).

In the display shown in Fig. 14, two modules are selected. Iternally, the file as loaded is managed by the module management data and header management data in main memory 13 (see Fig. 10). In this case, the kind flag of the sub-header in data header area $13_3$ is set to the general file. The data size, OS flag, device flag, and directory entry and the like are set.

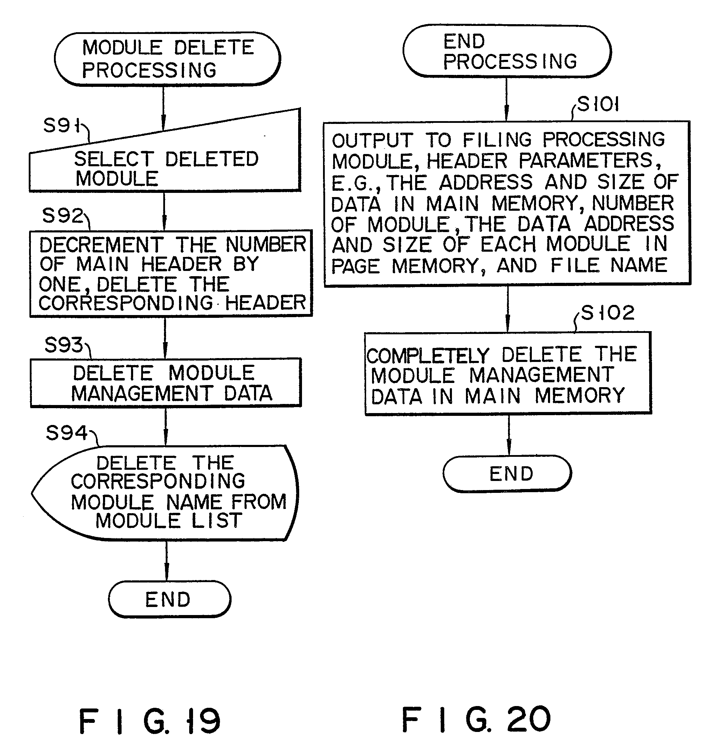

When icon [Module Delete] is pointed out (step S50), a module delete processing is performed (step S51). As a result, the module already selected is deleted. As is seen from Fig. 19 showing a module delete processing flow chart, an operator selects a file to be deleted from the directory list (step S91). The number of modules is decreased by one and the corresponding header is deleted (step S92). Further, the corresponding module management data is deleted (step S93). Finally, the module name is removed from the module list being displayed on the screen (step S94).

When the operator points out icon [End] (step S52), an end processing is performed (step S53). As seen from Fig. 20 showing an end processing flow chart, the data address and size, and the number of modules in header management data area $13_2$, the address and size of the data for page memory 14 as stored in module management data area $13_1$, and additionally a key word to be stored in magnetic disk 27a, for example, file name, are transferred to filing processing module 13a (step S101). All the module management data in main memory 13 are erased (step S102), and the end processing is completed.

In a display of Fig. 15, "Volume" is selected for the "Module Type". The operation of this mode is similar to that when the general file is selected. The difference between them resides in a sequence of operation steps, which results from selection of "YES" for "Directory list". The selection of "YES" sets the directory list data in the option area of the sub-header. The directory list data will be used in a retrieval mode.

In the module select processing flow chart as is shown in Fig. 18, if "Volume" is selected (step S72), the data of all the tracks of the designated device (floppy disk 28a) are loaded as module data into page memory 14 (step S78). The management data for that data is additionally stored into module management data area $13_1$ in main memory 13. The data header is additionally stored into data header area $13_3$ of main memory 13 (step S80). At this time, if the directory list flag is "YES" (step S81), the directory list data is set in the option area in the sub-header part as stored in main memory 13 (step S82). Further, the selected module is additionally listed in the module list on the display (step S76).

As a matter of course, the general file and the volume module may coexist.

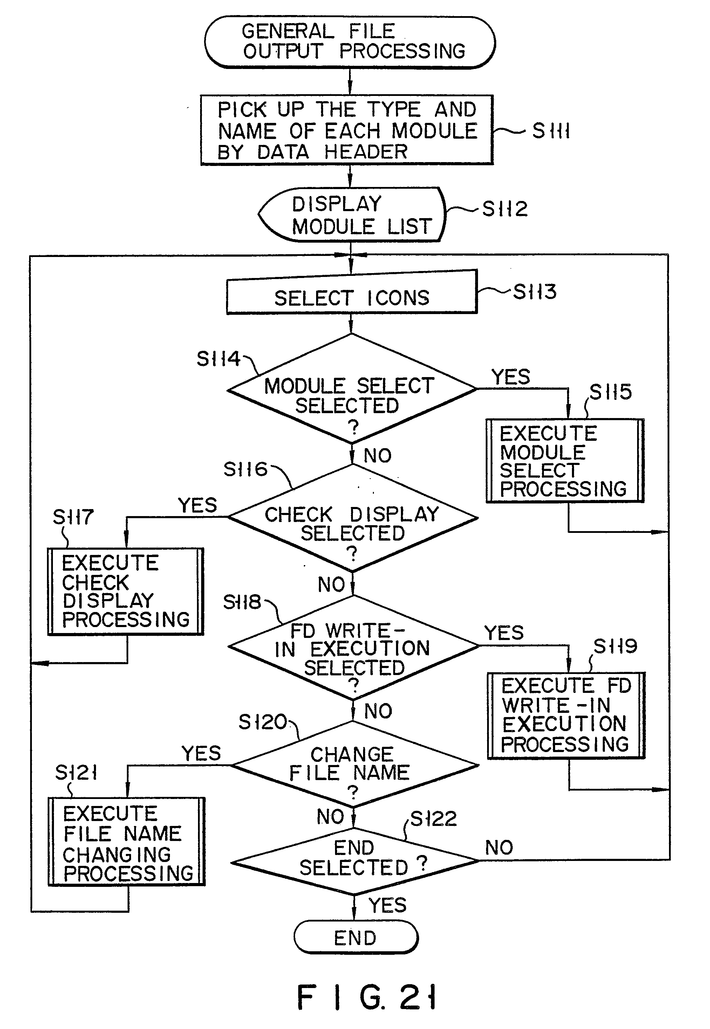

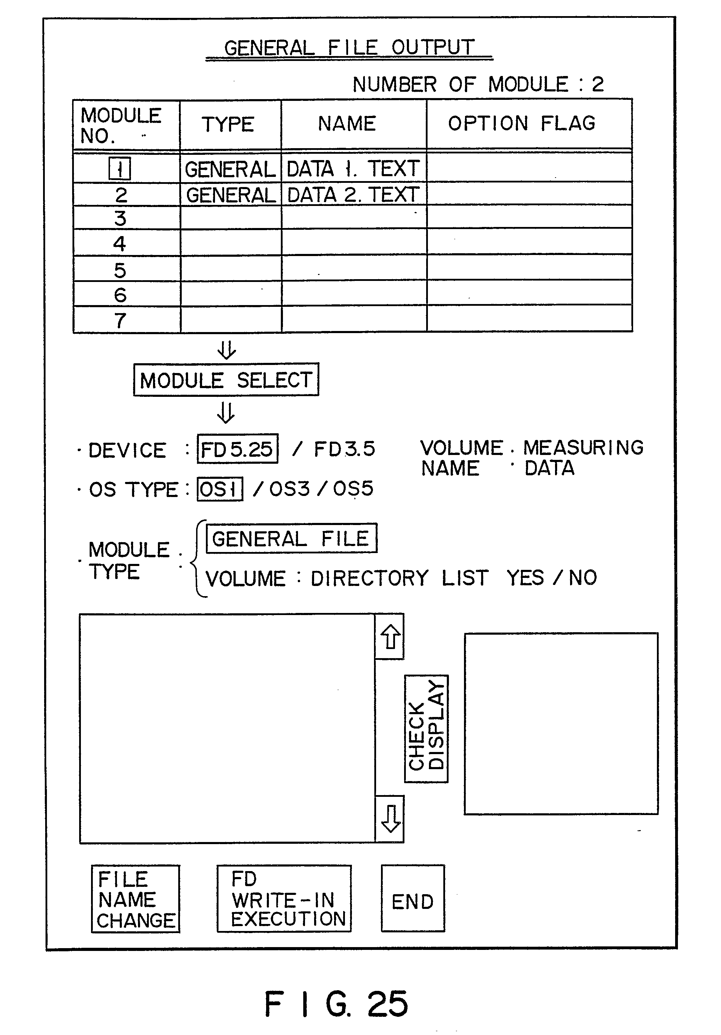

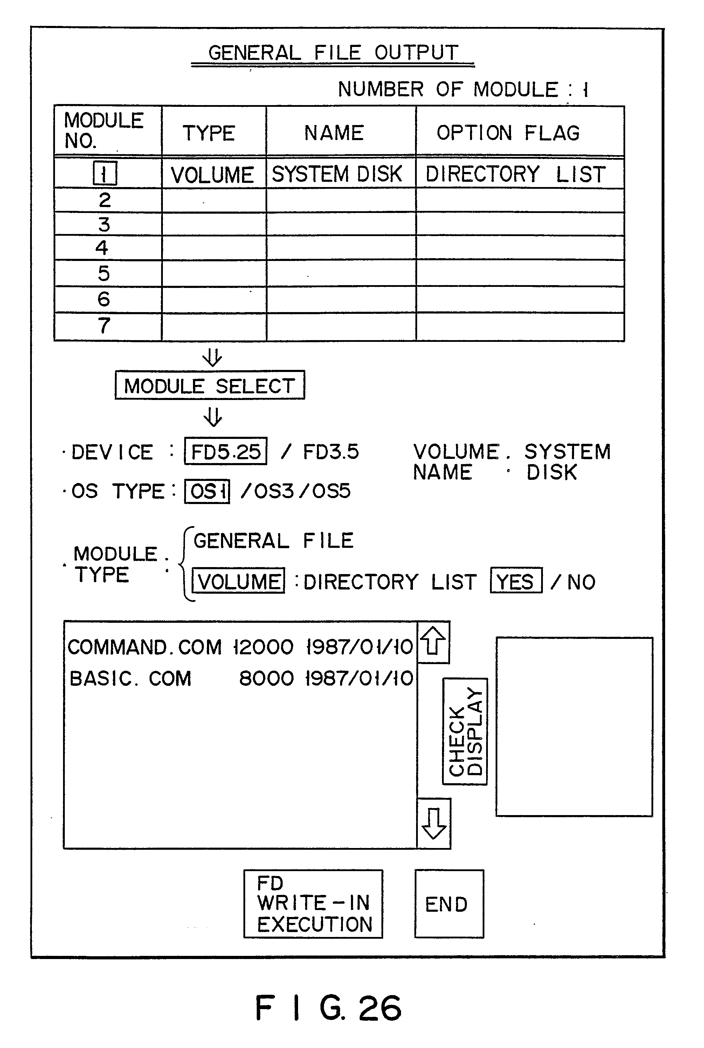

A FD write-in processing as called from the retrieval processing will be described. Flow charts shown in Figs. 21 to 24, and displays shown in Figs. 25 and 26 will be used for the description.

In a retrieval mode, when data is read in from optical disk 19, if the data is the code data, it is read in page memory 14. At this time, if the image expandable flag is set, the data can be displayed. When an operator directs the apparatus to write the code data into floppy disk 28a, filing processing module 13a requests FDR/W processing module 13c to write the data into floppy disk 28a according to the direction by the data header portion.

The write-in processing to floppy disk 28a further calls the general file output or the specific application file output by the kind flag in the sub-header part. Fig. 25 shows a display for the kind flag indicating the "General file". Description of the specific application file will be given later.

Upon calling of the general file output processing, the data header picks up the type of each module and the file name (step S111 in Fig. 21). In turn, CRT display device 24 gives the Fig. 25 display including a module list (step S112). Incidentally, the display of Fig. 25 is obtained when an operator retrieves the data that is registered into optical disk 19 by using the Fig. 14 display.

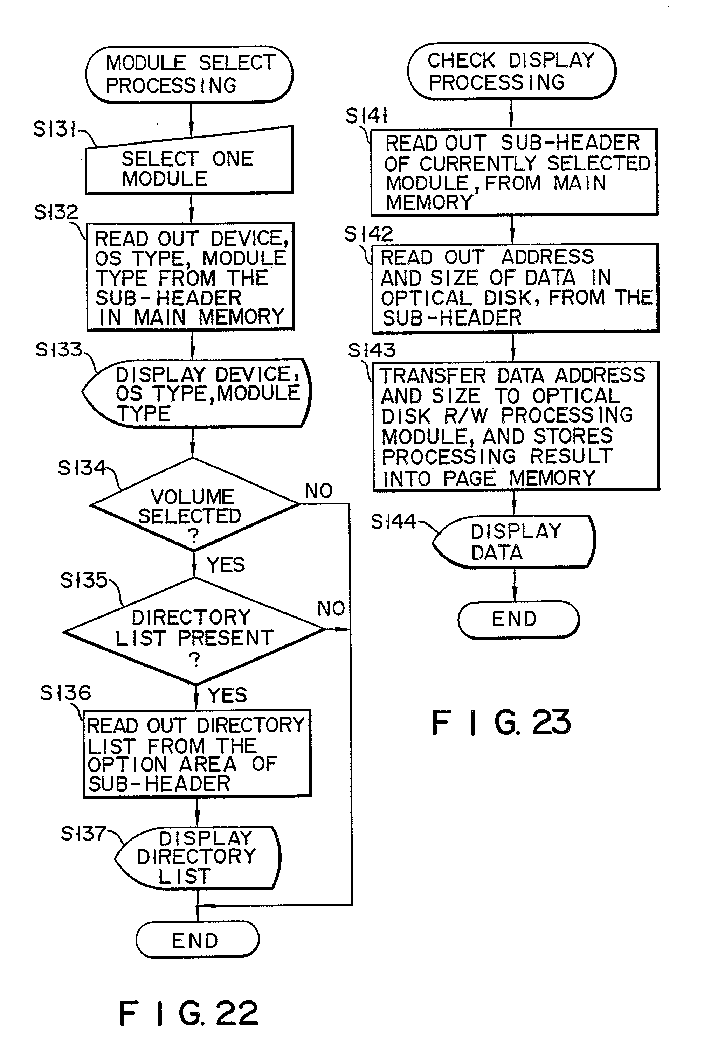

The operator selectively points out directive items on the display by using keyboard 23 or mouse 29 (step S113). When icon [Module Select] is pointed out (step S114), the module select processing is performed (step S115). As is shown in Fig. 22 showing a module select processing flow chart, the operator selects one of the modules (step S131). More specifically, he sees the module list on the Fig. 25 display containing two types of modules, and selects a desired module by pointing out it by keyboard 23 or mouse 29. Upon selection of the module, the device, the type of OS, and the type of the module are read out from the sub-header in main memory 13 are read out (step S132), and are displayed (step S133). In the case of the general file (step S134), control terminates the module select processing, and returns to the general file processing.

When icon [Check display] is designated (step S116 in Fig. 21), the check display processing is performed. The result is that code/image converter 12b converts the dump data of the module data into the image data, and transfers it to display device 24 for display. As seen from a check display processing flow chart of Fig. 23, the sub-header of the selected module is read out from main memory 13 (step S141), the address and size of the data in optical device 19 is read out from the sub-header (step S142). Control reserves a memory area amounting to the data size in page memory 14, and transfers the data address and size to ODR/W processing module 13d. This module 13d loads the data into page memory 14 (step S143). The data is also displayed on the display (step S144).

When icon [FD Write-in Execution] is decided (Step S118), it is executed (step S119). The result is to write the data into floppy disk 28a. If the file name change is decided, the file name of the file written into floppy disk 28a can be changed to the file name that was used in the data registration.

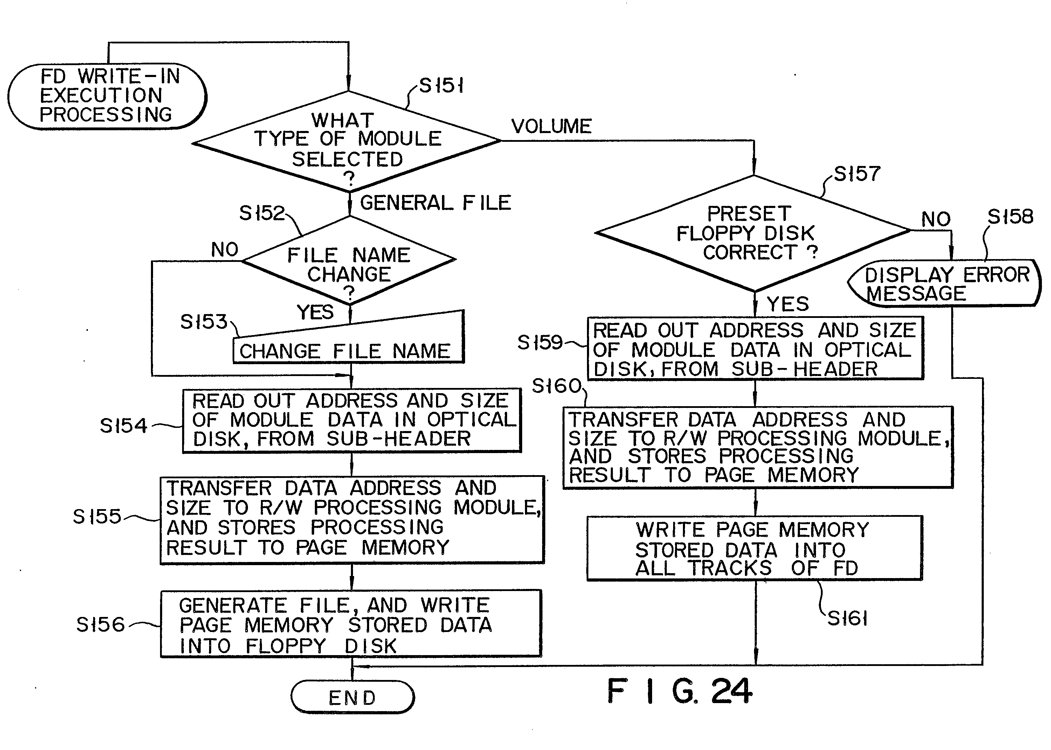

Reference is made to Fig. 24 showing a flow of the FD write-in execution processing. If a decision diamond of S151 gives the answer of the general file, another decision diamond S152 asks an operator to decide whether the file name is changed or not. If the answer is YES, he changes it to a new file name as entered (step S153). Control reads out the address and size of the data of optical disk 19, from the sub-header (step S154). Control reserves the memory area amounting to the data size in page memory 14, and transfers the data address and size to ODR/W processing module 13d. This module 13d loads the data into page memory 14 (step S155). The data is also converted into the code data by code/image converter 12b, and loaded into floppy disk 28a (step S156).

When icon [File Name Change] is decided (step S120 in Fig. 21), the file name change processing is performed (step S121). When icon [End] is selected (step S122), the output processing of the general file ends.

Fig. 26 shows a display when "Volume" is selected for the type of module. The processing for this type of module is similar to that when "General file" is selected. In the difference between them, the "Directory list" flag is "YES". In the case of "YES", when icon [Module Select] is selected, the directory list stored in the option area of the sub-header is presented on the display. This may be referred to when the data is output to floppy disk 28a. As seen from a module select processing flow chart of Fig. 22, when the device, type of OS, and type of the module are displayed (step S133), it is assumed that "Volume" is selected (step S134), and the directory list flag is "YES" (step S135). In this situation, the directory list data is read out from the option area of the sub-header (step S136), and is presented on the display (step S137).

In the FD write-in execution mode, if "Volume" is selected for the type module (step S151 in Fig. 24 showing the FD write-in execution processing flow chart), the device (floppy disk 28a) used in the registration is compared with the device currently used (step S157). When these are not coincident, an alarm message is displayed by CRT display device 24 (step S158).

When coincident, the data of all the tracks of the device is loaded into the present device or disk. The address and size of the data in optical disk 19 is read out from the sub-header (step S159). In the next step S160, control reserves a memory area amounting to the data size in page memory 14, and transfers the data address and size to ODR/W processing module 13d. This module 13d loads the data into page memory 14. The data is converted into the code data by code/image converter 12b, and the converted code data is loaded into floppy disk 28a. In this way, the data in page memory 14 are written into all of the tracks of floppy disk 28a (step S161).

Alternatively, one file is selected from the directory list, and the selected file alone is written into floppy disk 28a.

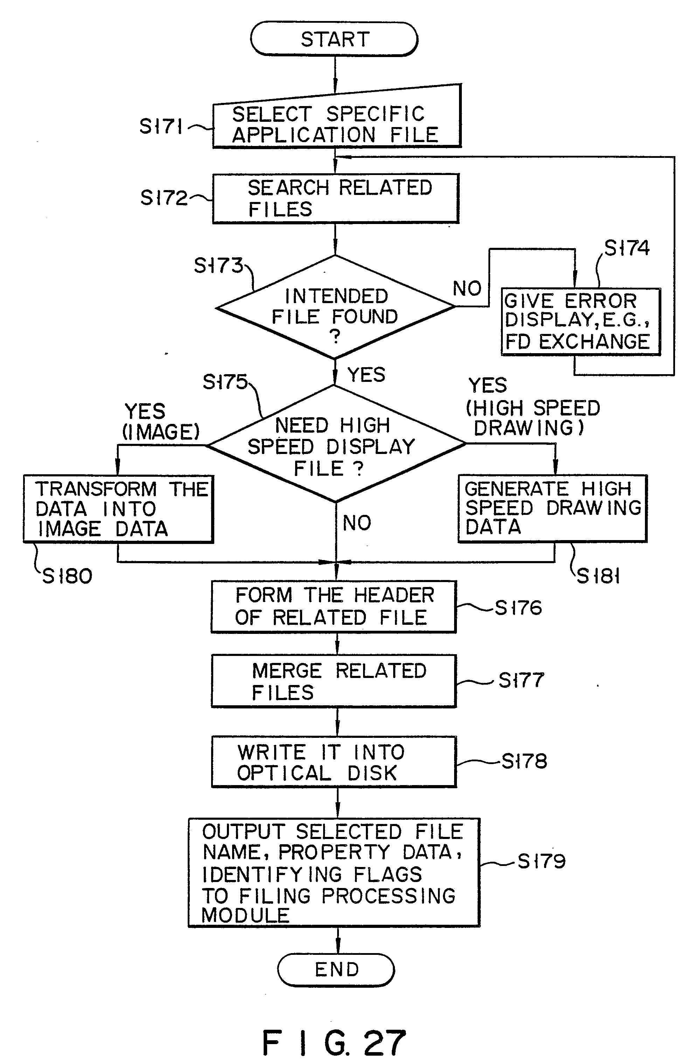

A registration/retrieval processing of specific application file will be described. The registration of the CAD drawing data prepared by a personal computer will first be discussed referring to Fig. 27. In the mode of registering the specific application, an operator sees a proper sheet on the display, and selects a desired specific application file (step S171). Upon that selection, related or intended files are searched (step S172). If an intended file is not found (step S173), an error message such as "Exchange the floppy disk to another" is given on the display (step S174).

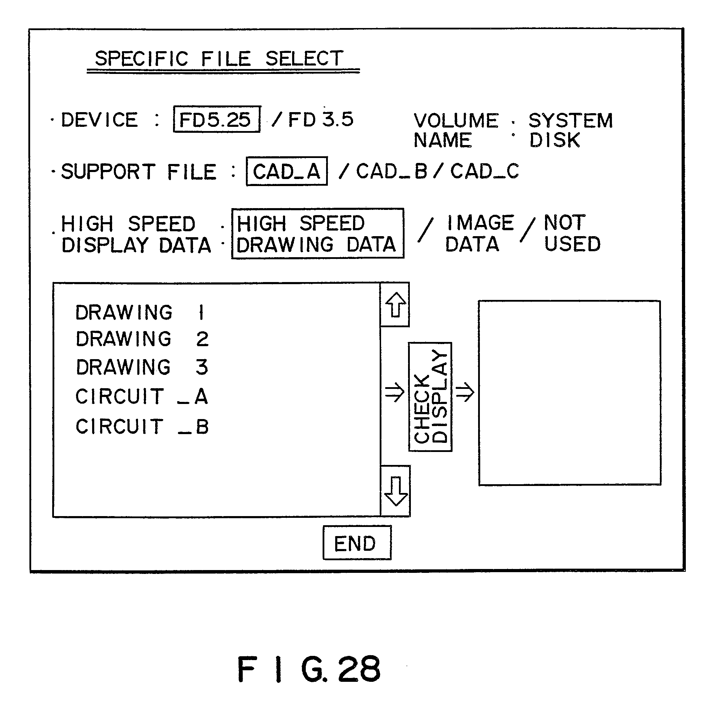

When control succeeds in searching the related files, viz., the related files are found, if the additional use of a high speed display file is not needed (step S175) (this is designated by pointing out "not used" in item [High Speed Display Data] by mouse 29 or keyboard 23 in Fig. 28), the header for the related files is prepared (step S176), and those related files including that with the prepared header are merged (step S177). The data of the merged file is written into the optical disk (step S178). Control transfers the selected file name, proper data, identifying flags to filing processing module 13a (step S179), and terminates this processing.

In step S175, if the additional use of high speed display is needed, and more exactly "image data" is selected, the data is expanded into the image data (step S180) (this designated by pointing out "Image data" in [High Speed Display Data] in Fig. 28), and the image data is also merged (step S177). If the "High speed drawing" is selected as in the designation of the above items, the high speed drawing data is generated (step S181), and the generated data is also merged with the files (step S177).

The registration of the specific application will further be described. When the registration of the specific application is directed, a specific application file processing module presents a proper sheet on the display as is shown in Fig. 28. After seeing this proper sheet, an operator selects a file name supported by this specific application file processing module by using a mouse 29, for example. Upon this selection, a list of file names with properties such as CAD are displayed as is shown.

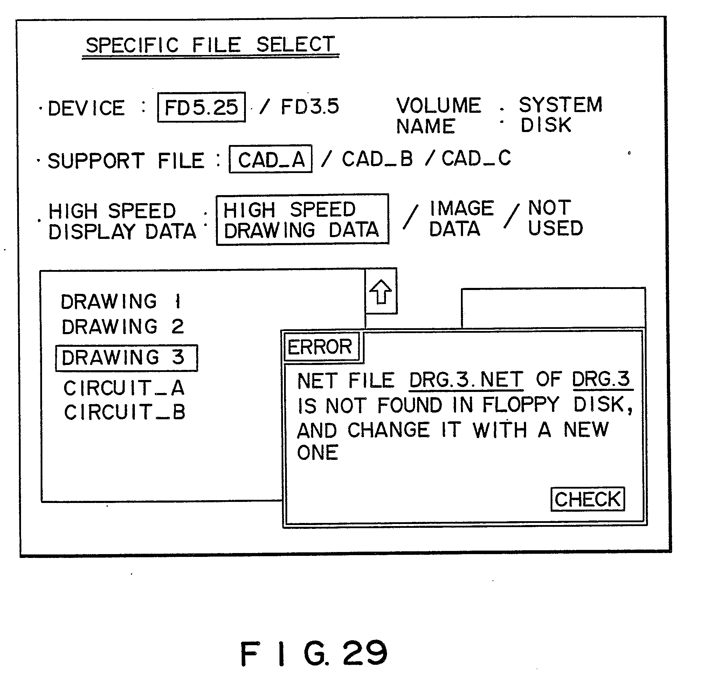

As already mentioned, a sheet of drawing contains a plurality of related files. Normally, the same file name attached with appropriate proper symbols such as ABC, and XYZ are applied for these files. The different file names will be found on the file display, with omission of the proper symbols. In some CAD systems, these files are listed in another directory or stored in another floppy disk 28a. Therefore, when the intended file cannot be searched as in step S174 in Fig. 27, an error message is presented as is shown in Fig. 29, and calls upon an operator to change the present disk to another.

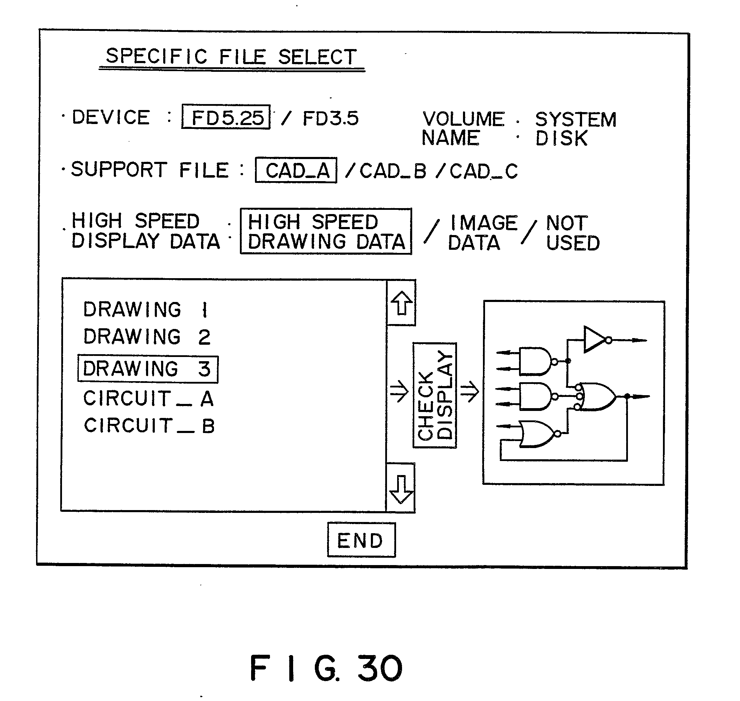

When icon [Check Display] is selected as in the case of the general file, the designated drawing is displayed as is shown in Fig. 30. At this time, this specific application file processing module searches an image expandable file with the designated file name, and expands it into the image.

As described referring to step S176 in Fig. 27, the directory name, volume name, and type of media of each file, and the properties of each file such as file name, file size, and date of data preparation are picked up and assembled into the document management system.

For reliable and effective data retrieval, check to see whether the retrieval file to be loaded into floppy disk 28a is correct or not, is indispensable, before it is loaded into the disk. In connection with this, the information processing apparatus under discussion presents a drawing developed on the display and this improves the operability of the filing apparatus. For developing the CAD drawing on the display, the utility routine to execute the image expansion must be prepared for each CAD. Practically, therefore, it is almost impossible to expand all types of CAD drawings into the image. The measure for this to use identifying flags to indicate the type of CAD used for the drawing data, and to indicate if the image expansion of the drawing data is possible, at the stage of registration. With the measure, when reading out the file with such identifiers by an information processing apparatus, an operator may check whether the file can be image expanded or not by the used filing apparatus.

At the time of retrieving the drawing data, the high speed display of drawings is a desirable thing. Even if the function to image expand the original data by CAD is supported by the information processing apparatus, much time consumed for expanding the data into the image would considerably damage the operability of the processing apparatus. This problem becomes more serious, as the size of drawing is layer. To solve this problem, some measure must be taken for the the display of the CAD drawing data when it is retrieved.

To achieve this, in the information processing apparatus according to this invention, the plurality of CAD data are registered together with a file so formatted as to allow a high speed display of the CAD data. This is realized by two methods of steps S181 and S180 in Fig. 27. The first method of step S181 is to convert the CAD original file into the high speed drawing data so formatted as to allow the hardware/firmware for drawing processing to be operable most efficiently, and to store the CAD files together with the generated data. The display speed by this method depends on the performance of the hardware/firmware used. The second method of step S180 is to transform or expand the CAD original data into the image data, and to additionally use the image data as intact. As in the step S175 described in connection with the proper sheet of Fig. 28, the second method is executed in the following manner. Either of the two types of data, both of them, or none of them is selected and additionally used. In case that the CAD drawing data is used for fixed purposes, this selection may automatically be made if the selecting procedure is programmed. The selection may be programmed by software, the CAD drawing data whose use is almost fixed. Further, the combination of the manual selection and the software selection may be used, if necessary.

As described above, different types of files describing one sheet of drawing are systematically arranged and handled as a batch of data for storage and management. There are various methods to realize this document management. In the first method for the document management, various drawing data are arranged into documents each with title or key word and note. These properties are used to define an identifier to indicate the drawing data of the same drawing, by using these properties. In the second method, various data are arranged into pages. With the data of one drawing within one document, the data is stored at the memory location assigned to the page number. In the third method, related files are merged into unit data. The unit data is treated as one page. Further, the type of data is changed for each binder. The combinations of the above methods may be allowed. The above methods may be supported by the filing apparatus according to this invention. In such a case, any of the methods to be used may be selected manually. Further, the selection may automatically be made by a software technique. The above-mentioned embodiment employs the automatic selection.

In the first method that the data file of one drawing is made to correspond to one document, when the data registration is executed, the work sheet file of that drawing is registered as a first page. Then the net data file and the plot file of the drawing are registered in the next page, and further the data file for high speed retrieval display is registered in response to the instruction by an operator, as described above. Some operation or operation specification require that as for the order of data registration, the first page data is used as the image expandable data. Satisfactory outputting of the data to the floppy disk requires that the former order is employed. Any of the following ordering methods may be used: (1) the order is determined case by case, (2) it is determined by an instruction by an operator, and (3) the system determines the order.

In any of the above registering orders, the registered data are each necessarily followed by the following property data; directory name, volume name, type of media, file name, file size, date of preparation, flag to indicate if the application software is used for data preparation, data to indicate if the registered data is expandable to an image, flag to indicate the type of CAD used, yes or no for use of the high speed display file. The data are registered page by page automatically or after check by an operator.

In the second method that the data files relating to one sheet of drawing are merged together into one page, when the data registration is executed, the data registration is performed in a similar way, except that the data files are merged. Further, this method uses additional property concerning the merge, for example, the number of merged files and boundaries of the merged files.

The information processing apparatus according to this invention may register the data as prepared by every type of personal computer. When the data registered is retrieved, the compatibility of the apparatus with a floppy disk to be loaded with the retrieved data, must be checked. To this end, a flag to indicate the type of the OS of the personal computer by which the CAD data was prepared is further used for the property data.

The specific application processing of the embodiment as mentioned above is based on the latter method. Specifically, the work data file, net data file, plot data file, and further high speed drawing data are merged together. The merged data is stored into the data part of the optical disk format shown in Fig. 5. The image expandable files, data properties, identifying flags are stored into the sub-header part. When an operator points out icon [End] in the Fig. 30 property sheet, and checks the registered files, this processing is automatically performed by the specific application file processing.

The identifying flag to indicate the high speed display file is stored to the option area of the sub-header of Fig. 9. It is further stored as the data to indicate the structure of the sub-header in the application flag or the reserve area of the main header of Fig. 6.

The CAD drawing data frequently describes a configuration of a figure by combining predetermined parts. These parts are screws, nuts, etc. for mechanical CAD, and general ICs, resistors, capacitors, etc. for electrical CAD. In CAD, an entire drawing is generated by selecting their symbols and entering relative positions of them. This type of CAD needs the data indicating the symbols in addition to the data describing the relative positions and connections. For this reason, for registering the CAD drawing data, the symbols used are also registered. A general CAD uses two types of symbols, general symbols and symbols for special parts. The general symbols are used by every type of CAD. In registering the CAD drawing data, it is only needed to add the symbols for special parts alone. In the present embodiment, only the part symbols other than the general symbols as designed by users are additionally used when the data is registered.

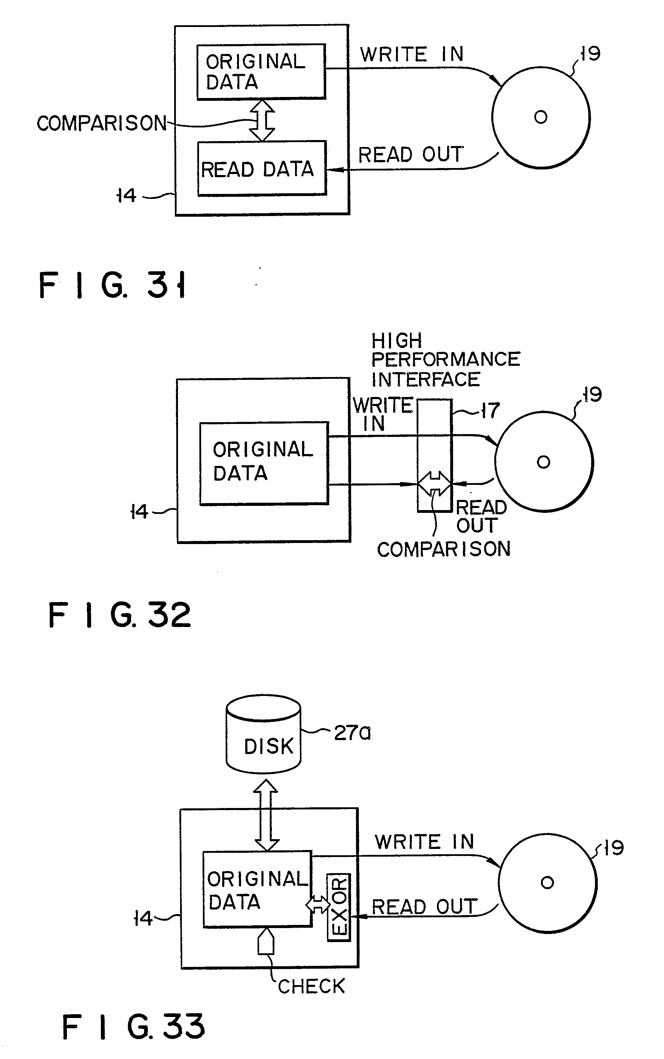

In case that a data registration mode, appropriate code data is written into the optical disk as in the information processing apparatus under discussion, a high reliability is required for the code data to be written. Therefore, it is desirable to check the code data before it is loaded into the optical disk. In this case, the most reliable check is to read out the stored data from the optical disk, and to compare it with the original data. The processing apparatus under discussion employs three check methods which are selectively used depending on the apparatus composition used. These will be described referring to Figs. 31 to 33.

It is assumed now that the data to be registered is stored in page memory 14. The first method to first be discussed is suitable for the apparatus whose page memory 14 has a sufficient memory capacity. As is shown in Fig. 31, a memory area amounting to the data size of the registered data (original data) is reserved in page memory 14. After loaded into optical disk 19, the data is read out from the the disk, and loaded into page memory 14. The read out data and the original data are compared in page memory 14, to check if these are coincident or not.

The second method uses interface circuit with a comparative verifying function, as is shown in Fig. 32. With this function, in place of loading the data of optical disk into page memory 14, the original data to be written into the page memory is read out and subjected to the comparison.

The third method shown in Fig. 33 modifies page memory 14 so as to have a raster conversion processing function. In this method, the data as read out from optical disk 19 is loaded into page memory 14, while being exclusively ORing with the original data. The result of the exclusively ORing operation shows "0" when both data are coincident with each other, but shows a logical value other than "0" when both data are not coincident. Therefore, check to see if the operation results are all "0" suffices for the registered data check. When both data are not coincident, the data must be registered again. In this case, since the original data are destroyed when it is read out, it must be restored into the correct data by reading out it from the optical disk and writing it into the page memory through the Ex-OR logic. Alternatively, before read out, the original data may be stored in floppy disk 28a or magnetic disk 27a.

As for these check methods, the information processing apparatus according to this invention is arranged that a check mechanism to be operated, and the function used when it is operated are designated in advance by an operator on the basis of the apparatus composition.

The property data of the data, when registered, is preferably stored into magnetic disk 27a for managing one document. The application software is designed so that after the data registration processing ends, the above data is returned as return values to filing processing module 13a, so as to allow the property data to be input to MD processing module 13f. This processing is similar to that for the general file processing.

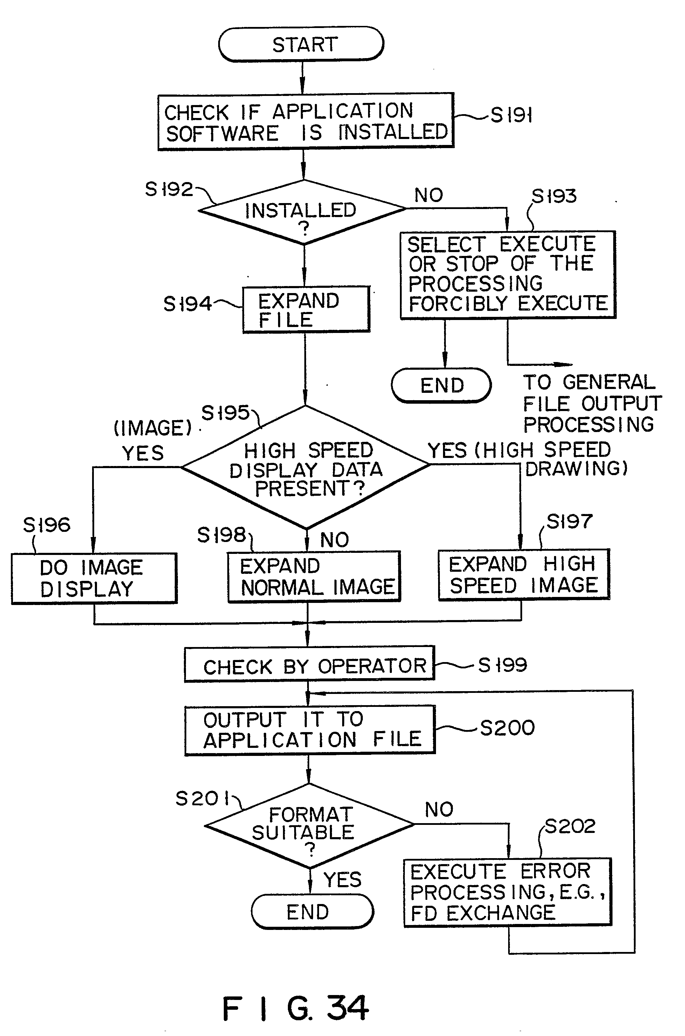

Retrieval of the drawing data will be described referring to Fig. 34. Control causes filing processing module 13a to retrieve the document by the ordinary procedure. At this time, the retrieved document is checked if these are the normal image data. If it is not the normal image data, decision is made as to whether or not the document is the specific application file, referring to the identifying flag described in that data. If it is not the specific application file, the general file processing is performed.

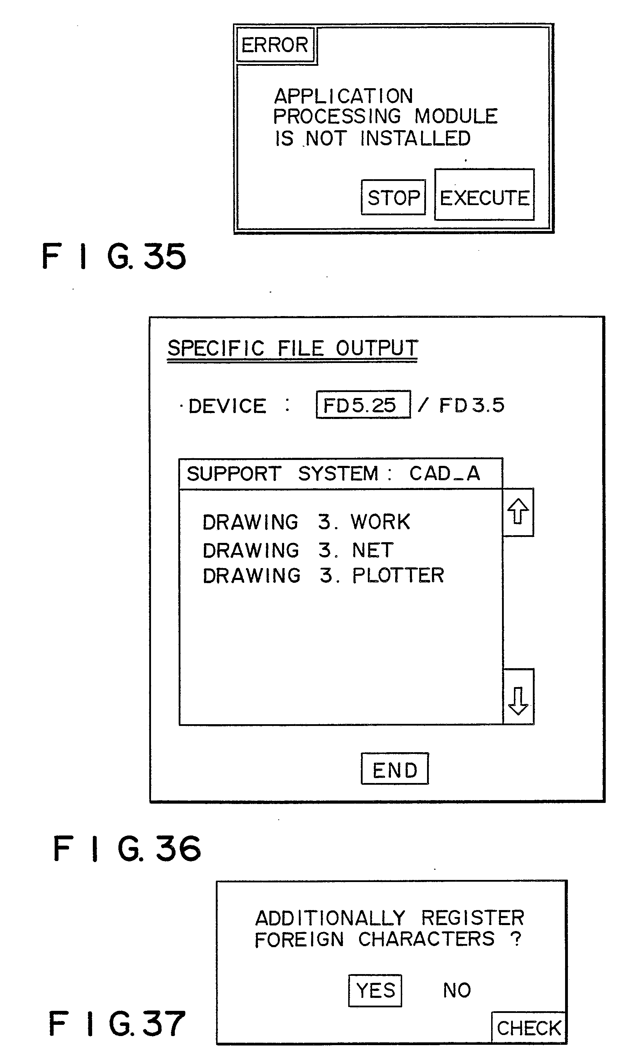

When decision is made that the present document is the specific application file, control checks if a software for executing the processing of the data is installed in the processing apparatus (step S191). If not installed (step S192), control presents a message of such a meaning on the display, as is shown in Fig. 35 and asks an operator to forcibly load the application file as intact into a specific file according to the format of this apparatus or to not write the same (step S193).

When that software is installed, control expands the file according to the data structure as set at the time of its registration (step S194). In other words, the vector data supplied from floppy disk 28a is transformed into raster data (image data) by vector/raster converter 12a.

During the check of the retrieved data, which is performed in a normal retrieval mode, control picks up the option area of the sub-header, and check contents of the identifying flag to indicate if the high speed display data is present or absence (step S195). If it is present, control executes the image display (step S196) or the high speed image expansion (step S197). If it is not present, control executes the normal image expansion (step S198).

After an operator checks the data (step S199), the specific application file processing presents a property sheet as is shown in Fig. 36 on the display, and requires an operator to select the device used. The property sheet the types of support apparatus by which the specific application file was generated, such as CAD-A, CAD-B, and CAD-C, and shows the expanded files. The application software automatically executes the following tasks; 1) to set the data respectively into files, 2) to register the data in designated directory, and to record data into different floppy disks 28a (step S200).

When the data is recorded into floppy disks 28a, an operator will frequently encounter the floppy disks with different OS formats from that of the retrieved data. This can be checked by the OS identifying flag. After it is checked, if the format is different (step S201), control presents an error message to that effect, and requires an operator to make actions, for example, disk exchange and delete (step S202).

The remaining processings are substantially the same as those for the general rule processing module.

The description of the specific application file to follow is the registration and retrieval of the document data (text file) by the word processor. The registration/retrieval processing of this type of document data, which is performed by code/image converter 12b, is substantially equal to that of the CAD drawing data as mentioned above. When the document data contains special characters such as externally resistered characters, the data of special characters may be registered. To this end, the processing apparatus is capable of displaying a property sheet as is shown in Fig. 37. In registering the word processor document data, i.e., text data, an operator may selects either of registering foreign letters or not registering while seeing the displayed property sheet. In the usual text data management, the data containing a plurality of pages or text pages is registered into a single file. The data file is printed out page by page, divisionally. In the data management system according to this invention, however, one page is assigned to one file, as recalled. The difference between these data management systems are removed by using the following two ways of processings; 1) when next/preceding page is designated on the retrieval display, the data are successively processed file by file, and 2) when test next/preceding page is designated, the text data is successively updated page by page within the same file.

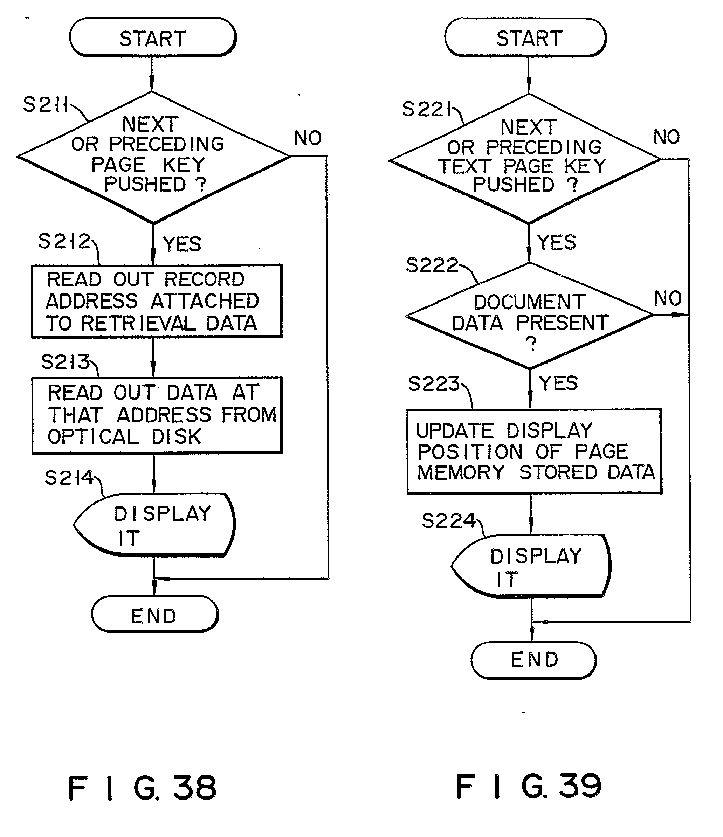

The processing flow of the registration/retrieval of text data will be described referring to Figs. 38 and 39. In Fig. 38, when the next page or the preceding page is designated (step S211), control reads out the address of the retrieved data (step S212). The data specified by the address is read out from optical disk 19 (step S213) and displayed on CRT display 24 (step S214).

In Fig. 39, when text next page of text preceding page is designated (step S211), control checks if the data currently displayed is the text data or not (step S222). If the answer is YES, the processing is made so that the display position of the present data of page memory 14 is shifted forwardly or backwardly by one page (step S223).

Then, that data is displayed (step S224).

As described above, an information processing apparatus according to this invention is capable of smoothly handling the document data and drawing data stored in the floppy disk, like paper documents and drawings.

## Claims

1. An information processing apparatus for processing both image data and code data, said apparatus characterized by comprising:
first storing means (19) for storing at least one of the image data and the code data; and
second storing means for storing first retrieval data for retrieving the image data from said first storing means (19) and second retrieval data for retrieving the code data from said first storing means (19), the first retrieval data having a data structure for defining the retrieval data and first identifying data representing the image data, the second retrieval data having the same data structure as the data structure of the first retrieval data and second identifying data representing the code data.

2. The information processing apparatus according to claim 1, characterized by further comprising control means (12) for discriminating the first and second identifying data to identify the image and code data.

3. The information processing apparatus according to claim 2, characterized by further comprising first input means (37) for inputting the image data and second input means (17) for inputting the code data, and
characterized in that said control means (12) includes: means for checking if the data input by said first and second input means (37, 17) is the image data or the code data to obtain a check result; means for generating the first retrieval data having first identifying data when the check result shows the image data and for generating the second retrieval data having the second identifying data when the check result shows the code data; and memory control means for storing the data input by said first and second input means (37, 17) into said first storing means (19) and for storing the first and second retrieval data generated by said generating means into said second storing means.

4. The information processing apparatus according to claim 3, characterized in that said control means (12) further includes means for setting up said data structures each having data hierarchy, said data hierarchy including a plurality of data strata each containing a plurality of data units, the data unit in one data stratum having a plurality of data units in a data stratum lower than said one data stratum, and

said memory control means includes means for storing the data input by said first and second input means (37, 17) as the data unit of the lowest data stratum of the data strata as set up in said first storing means (19) by said set-up means.

5. The information processing apparatus according to claim 4, characterized by further comprising means for merging the image data input by said first input means (37) with the code data input by said second input means (17), and
characterized in that said generating means includes means for generating third retrieval data having third identifying data for identifying the data being merged by said merging means, and said memory control means includes means for storing the data merged by said merging means into said first storing means (19) and for storing the third retrieval data generated into said second storing means, the merged data being stored as the data unit of the lowest data stratum of the data strata as set up in said first storing means (19) by said set-up means.

6. The information processing apparatus according to claim 3, characterized by further comprising means (27a) for storing said first and second identifying data generated by said generating means.

7. An information processing apparatus having first input means (37) for inputting image data, second input means (17) for inputting code data, means (19) for storing the image data, and control means (12) for storing the image data input by said first input means (37) into said storing means (19), said information processing apparatus characterized by further comprising:
means for preparing flag data indicating the image and code data input by one of said first and second input means (37 and 17), and characterized in that
said control means (12) makes such a control as to store into said storing means (19) either of the image data and the code data input by said first input means (37) and said second input means (17), attendant with the flag data prepared by said preparing means, the same data structure being applied to both the image data and the code data.

8. The information processing apparatus according to claim 7, characterized by further comprising means (36) for compressing the image data input by said first input means (37), and
characterized in that said control means (12) includes means for storing the image data compressed by said compressing means (36) in accompany with the flag data into said storing means (19).

9. The information processing apparatus according to claim 7, characterized by further comprising means (28) for supplying the code data to said second input means (17).

10. The information processing apparatus according to claim 9, characterized in that said supply means (28) includes memory means (28a) for storing a plural pieces of code data, said preparing means includes means for preparing one piece of flag data on the assumption that all of the code data stored in said memory means (28a) constitute a single piece of code data, and said control means (12) includes means for storing all the code data stored in said memory means (28a) in accompany with the one piece of flag data into said storing means (19).

11. The information processing apparatus according to claim 10, characterized in that said memory means (28a) includes means for storing management data indicating contents of said plurality of code data, and said control means (12) includes means for storing both the code data and the flag data, and the management data as well, into said storing means (19).

12. The information processing apparatus according to claim 9, characterized in that said supply means (28) includes: memory means (28a) for storing a plural pieces of code data with different code formats; and means for selectively supplying at least one piece of data picked up from those pieces of code data in said memory means (28a), said preparing means includes means for preparing flag data containing the data discriminately identifying any of the code formats of the code data supplied from said selective supply means, and said control means (12) includes means for storing the code data supplied from said selective supply means in company with the flag data to said storing means (19).

13. The information processing apparatus according to claim 12, characterized by further comprising means for generating the data being displayed at a high speed according to the code data with a specific data format supplied from said selective supply means, and characterized in that said control means (12) includes means for storing the code data supplied from said selective supply means attendant with the flag data and the data generated by said high speed data generating means, into said storing means (19).

14. The information processing apparatus according to claim 13, characterized by further comprising means (23, 29) for indicating if additional use of the data generated by said high speed data generating means is needed.

15. The information processing apparatus according to claim 9, characterized by further comprising means (28a) for storing document data having character code data as prepared by a word processor, and code data of externally registered characters used in said document data, and characterized in that said control means (12) includes means for storing the document data attendant with the code data of the externally registered characters and the flag data into said storing means (19).

16. The information processing apparatus according to claim 9, characterized by further comprising means (28a) for storing drawing data having vector code data as prepared by a computer aided design system, and symbol data used for said drawing data, and characterized in that said control means (12) includes means for storing the drawing data in company with the symbol data and the flag data into said storing means (19).

17. The information processing apparatus according to claim 9, characterized by further comprising means (28a) for storing document data having character code data as prepared by a word processor, and drawing data having vector code data as prepared by a computer aided design system, and characterized in that said preparing means includes means for merging the document data and the drawing data, and means for preparing the flag data containing the data indicating said merged data for said flag data, and said control means (12) includes means for storing said merged data of document and drawing data attendant with said flag data into said storing means (19).

18. An information processing apparatus for processing both image data and code data, said apparatus characterized by comprising:
first storing means (19) for storing at least one of the image data and the code data;
second storing means for storing first retrieval data for retrieving the image data from said first storing means (19) and second retrieval data for retrieving the code data from said first storing means (19), the first retrieval data having data structure for defining the retrieval data and the second retrieval data having the same data structure as the data structure of the first retrieval data;
means (23) for inputting at least one of the first retrieval data and the second retrieval data; and
means (12) for retrieving at least one of the image data and the code data from said first storing means (19); said retrieving means (12) having first means for retrieving the retrieval data input by said inputting means (23) from said second storing means and second means for retrieving at least one of the image data and the code data corresponding to the retrieval data retrieved by said first means from said first storing means (19).

19. The information processing apparatus according to claim 18, characterized in that the first retrieval data further includes first identifying data representing the image data,
the second retrieval data further includes second identifying data representing the code data, and
said retrieving means further includes third means for discriminating the first and second identifying data to identify the image and code data.

CPU ~12 ~11

12a

12b

KEYBOARD ~23

INTERFACE ~17

MOUSE ~29

27a

MAGNETIC
DISK
DEVICE ~27

MAG-
NETIC
DISK

MAIN MEMORY ~13

14a

MAGNETIC
DISK
DEVICE ~28

FLOPPY
DISK

BUFFER
MEMORY

~10

PAGE
MEMORY ~14

28a

DISPLAY
MEMORY ~15

OPTICAL
DISK
DEVICE ~22

DISPLAY
CONTROLLER ~16

OPTICAL
DISK ~19

CRT
DISPLAY ~24

MAGNIFICATION/
REDUCTION
CIRCUIT ~34

~30

VERTICAL/
HORIZONTAL
CONVERTER ~35

~42

39

37

36

SCANNER
INTERFACE

SCANNER ~20

CODEC

PRINTER
INTERFACE

PRINTER ~25

~38

UCP ~43 ~31

RS-232C

GPIB

SCSI

41

BCP ~44

LAN

F I G. 1

**(ONE SIDE OF OPTICAL DISK)**

CABINET NAME

BINDER NAME
BACKBORN
CONTENTS

OPTICAL
DISK
FILE

— 1 —

NOTE

RETRIEVAL
TILE

NOTE

OPTICAL
DISK

— 15 —

CABINET

BINDER 1  BINDER 2 — — — — BINDER 8

DOCUMENT  DOCUMENT — — — — DOCUMENT

PAGE 1  PAGE 2 — — — — PAGE n

# F I G. 2

F I G. 3

EP 0 311 807 A2

FILING PROCESSING MODULE 13a

INTERFACE WITH
OTHER MODULES — 50

MODE SELECTOR — 51

GENERAL
FILE
PROCESSOR — 52

SPECIFIC
APPLICATION
FILE
PROCESSOR — 53

13c

FDR/W EXECUTING UNIT — 54

FLOPPY DISK 28a

F I G. 4

# F I G. 5

DATA HEADER PART

| MAIN-HEADER PORTION | SUB-HEADER OF MODULE 1 | SUB-HEADER OF MODULE 2 | – – – – – – | SUB-HEADER OF MODULE n |
|---|---|---|---|---|

SUB-HEADER PART

DATA PART

| DATA OF MODULE 1 |
|---|

| DATA OF MODULE 2 |
|---|

| DATA OF MODULE n |
|---|

# F I G. 6

| TOTAL DATA LENGTH (4 BYTES) | TOTAL HEADER LENGTH (2 BYTES) | REGISTRATION DATE (4 BYTES) | NUMBER OF CONSTITUENT MODULES (2 BYTES) | APPLICATION FLAG (2 BYTES) | PREPARATORY AREA (2 BYTES) |
|---|---|---|---|---|---|

EP 0 311 807 A2

| SUB-HEADER LENGTH (2 BYTES) | KIND FLAG (2 BYTES) | DATA ADDRESS (4 BYTES) | DATA SIZE (4 BYTES) | COM-PRESSION FORM (2 BYTES) | SCANN-ING DENSITY (2 BYTES) | IMAGE SIZE (4 BYTES) | OPTION AREA (0~n BYTES) |
|---|---|---|---|---|---|---|---|

F I G. 7

| SUB-HEADER LENGTH (2 BYTES) | KIND FLAG (2 BYTES) | DATA ADDRESS (4 BYTES) | DATA SIZE (4 BYTES) | DEVICE FLAG (2 BYTES) | DENSI-TY FLAG (2 BYTES) | OS FLAG (2 BYTES) | VOLUME NAME (12 BYTES) | OPTION AREA (0~n BYTES) |
|---|---|---|---|---|---|---|---|---|

F I G. 8

| SUB-HEADER LENGTH (2 BYTES) | KIND FLAG (2 BYTES) | DATA ADDRESS (4 BYTES) | DATA SIZE (4 BYTES) | DEVICE FLAG (2 BYTES) | DENSI-TY FLAG (2 BYTES) | OS FLAG (2 BYTES) | VOLUME NAME (12 BYTES) | DIRECTORY ENTRY DATA (32 BYTES) | OPTION AREA (0~n BYTES) |
|---|---|---|---|---|---|---|---|---|---|

F I G. 9

EP 0 311 807 A2

| MODULE NUMBER | CLAS-SIFI-CATION | NAME | DATA | |
|---|---|---|---|---|
| | | | ADDRESS | SIZE |
| 1 | GENERAL | DATA 1. TEXT | | 200 |
| 2 | GENERAL | DATA 2. TEXT | | 180 |
| 3 | | | | |
| 4 | | | | |
| 5 | | | | |
| 6 | | | | |
| 7 | | | | |

~13₁

| HEADER | | NUMBER OF MODULES |
|---|---|---|
| ADDRESS | SIZE | |
| | 100 | 2 |

~13₂

100 {
MAIN-HEADER
SUB-HEADER NO.1
SUB-HEADER NO.2
~13₃

200 { DATA 1. TEXT

180 { DATA 2. TEXT ~14

# F I G. 10

FIG. 11

F I G. 12

SELECT

MODE
- GENERAL  FILE
- SPECIFIC APPLICATION FILE

SELECT

F I G. 13

EP 0 311 807 A2

## GENERAL FILE SELECTION

·DEVICE : FD5.25 / FD3.5      VOLUME · MEASURING
                             NAME   · DATA

·OS TYPE : OSI / OS3 / OS5

· MODULE :  { GENERAL FILE
TYPE
           VOLUME : DIRECTORY LIST YES / NO

| DATA 1. TEXT 100 1987/08/01 ⇧ |
| DATA 2. TEXT 100 1987/08/01 |
| DATA 3. TEXT 100 1987/08/10 |
| DATA 4. TEXT 100 1987/08/10 |
| DATA 5. TEXT 100 1987/08/10 |

CHECK DISPLAY →

⇩ MODULE SELECT

⇩                    NUMBER OF MODULES : 2

| MODULE NO. | TYPE | NAME | OPTION FLAG | MODULE DELETE |
|---|---|---|---|---|
| 1 | GENERAL | DATA1. TEXT | | |
| 2 | GENERAL | DATA2.TEXT | | |
| 3 | | | | |
| 4 | | | | |
| 5 | | | | |
| 6 | | | | |
| 7 | | | | |

END

F I G. 14

## GENERAL FILE SELECTION

·DEVICE   :   FD5.25 / FD 3.5       VOLUME · SYSTEM
                                      NAME     · DISK

·OS TYPE :   OS1 / OS3 / OS5

·MODULE  ·   { GENERAL FILE
 TYPE    :   {
             { VOLUME : DIRECTORY LIST   YES / NO

```
COMMAND.COM 12000 1987/01/10  ⇧
BASIC. COM     8000 1987/01/10
```

CHECK DISPLAY

⇩  MODULE SELECT  ⇩

NUMBER OF MODULES : 1

| MODULE NO. | TYPE | NAME | OPTION FLAG | MODULE DELETE |
|---|---|---|---|---|
| 1 | VOLUME | SYSTEM DISK | DIRECTORY LIST | |
| 2 | | | | |
| 3 | | | | |
| 4 | | | | |
| 5 | | | | |
| 6 | | | | |
| 7 | | | | |

END

F I G. 15

GENERAL FILE
SELECT PROCESSING

SET FLOPPY DISK — S41

SELECT DEVICE AND OS TYPE — S42

READ OUT VOLUME NAME AND
DIRECTORY DATA FROM FLOPPY DISK,
AND WRITE THEM INTO MAIN MEMORY — S43

DISPLAY VOLUME
NAME AND DIRECTORY — S44

SELECT ICONS — S45

S46 — CHECK DISPLAY SELECTED ? — YES — S47 — EXECUTE CHECK DISPLAY PROCESSING

NO

S48 — MODULE SELECT SELECTED ? — YES — S49 — EXECUTE MODULE SELECT PROCESSING

NO

S50 — MODULE DELETE SELECTED ? — YES — S51 — EXECUTE MODULE DELETE PROCESSING

NO

S52 — END SELECTED ? — YES

NO

EXECUTE END PROCESSING — S53

F I G. 16

END

EP 0 311 807 A2

CHECK DISPLAY
PROCESSING

S61 — GENERAL FILE SELECTED ? ——VOLUME—— END

GENERAL FILE

S62 — SELECT ONE FILE FROM DIRECTORY LIST

S63 — READ OUT ALL THE CONTENTS OF THE SELECTED FILE

S64 — DISPLAY THE CONTENTS OF FILE

END

F I G. 17

MODULE SELECT
PROCESSING

SELECT ONE FILE
FROM DIRECTORY — S71

S72
GENERAL
FILE — WHAT
TYPE OF MODULE
SELECTED
? — VOLUME

STORE THE SELECTED
FILE INTO PAGE
MEMORY — S73

STORE FD VOLUME
DATA INTO PAGE
MEMORY — S78

ADDITIONALLY STORE
MODULE MANAGEMENT
DATA — S74

ADDITIONALLY STORE
MODULE MANAGEMENT
DATA — S79

ADDITIONALLY STORE
DATA HEADER INTO
MAIN MEMORY — S75

ADDITIONALLY STORE
DATA HEADER INTO
MAIN MEMORY — S80

S81
NO — DIRECTORY LIST
DESIGNATED
?

YES

SET DIRECTORY LIST
DATA INTO THE OPTION
AREA OF MAIN MEMORY

S82

ENTER THE
SELECTED MODULE
INTO MODULE LIST — S76

END

F I G. 18

```
       ┌──────────────────┐                      ┌──────────────────┐
       │  MODULE  DELETE   │                      │  END             │
       │  PROCESSING       │                      │  PROCESSING      │
       └──────────────────┘                      └──────────────────┘
                │                                          │
   S91          ▼                                          ▼        S101
       ┌──────────────────┐              ┌────────────────────────────────┐
       │  SELECT  DELETED  │              │ OUTPUT  TO  FILING  PROCESSING │
       │  MODULE           │              │ MODULE, HEADER  PARAMETERS,    │
       └──────────────────┘              │ E.G., THE  ADDRESS  AND SIZE OF│
                │                         │ DATA  IN MAIN  MEMORY, NUMBER  │
   S92          ▼                         │ OF MODULE, THE  DATA  ADDRESS  │
       ┌──────────────────┐              │ AND  SIZE  OF  EACH  MODULE  IN │
       │ DECREMENT THE NUMBER│           │ PAGE  MEMORY, AND  FILE  NAME   │
       │ OF MAIN  HEADER  BY │           └────────────────────────────────┘
       │ ONE, DELETE  THE    │                          │
       │ CORRESPONDING·HEADER │                         ▼        S102
       └──────────────────┘              ┌────────────────────────────────┐
                │                         │ COMPLETELY  DELETE  THE         │
   S93          ▼                         │ MODULE  MANAGEMENT              │
       ┌──────────────────┐              │ DATA IN MAIN  MEMORY           │
       │  DELETE  MODULE   │              └────────────────────────────────┘
       │  MANAGEMENT  DATA │                          │
       └──────────────────┘                          ▼
                │                             ┌──────────────┐
   S94          ▼                             │     END      │
       ┌──────────────────┐                   └──────────────┘
       │  DELETE  THE      │
       │  CORRESPONDING    │
       │  MODULE NAME FROM │
       │  MODULE  LIST     │
       └──────────────────┘
                │
                ▼
       ┌──────────────┐
       │     END      │
       └──────────────┘
```

F I G. 19                    F I G. 20

EP 0 311 807 A2

```
           ┌─────────────────────┐
           │   GENERAL FILE      │
           │  OUTPUT PROCESSING  │
           └─────────────────────┘
                     │
                     ▼
           ┌─────────────────────┐
           │ PICK UP THE TYPE AND│
           │ NAME OF EACH MODULE │──── S111
           │ BY DATA HEADER      │
           └─────────────────────┘
                     │
                     ▼
           ┌─────────────────────┐
           │     DISPLAY         │──── S112
           │   MODULE LIST       │
           └─────────────────────┘
                     │
                     ▼
           ┌─────────────────────┐
           │    SELECT ICONS     │──── S113
           └─────────────────────┘
                     │
                     ▼
      S114          ◇
           MODULE SELECT ◇───YES──→  S115
             SELECTED                ┌──────────┐
                ?                    │ EXECUTE  │
                │NO                  │ MODULE   │
                ▼                    │ SELECT   │
      S116     ◇                     │PROCESSING│
   S117  YES ◇ CHECK DISPLAY         └──────────┘
   ┌────────┐   SELECTED
   │ EXECUTE│      ?
   │ CHECK  │      │NO
   │ DISPLAY│      ▼
   │PROCESS-│ S118 ◇
   │ ING    │   FD WRITE- ◇───YES──→  S119
   └────────┘  IN EXECUTION          ┌──────────┐
              SELECTED               │ EXECUTE FD│
                 ?                    │ WRITE-IN │
                 │NO                 │ EXECUTION│
      S120       ▼                   │PROCESSING│
   YES ◇  CHANGE ◇                   └──────────┘
   S121  FILE NAME
   ┌────────┐  ?
   │ EXECUTE│  │NO    S122
   │ FILE   │  ▼   ◇
   │ NAME   │  END ◇───NO
   │CHANGING│ SELECTED ?
   │PROCESS-│    │YES
   │ ING    │    ▼
   └────────┘ ┌──────┐
              │ END  │
              └──────┘
```

F I G. 21

MODULE SELECT PROCESSING

S131 — SELECT ONE MODULE

S132 — READ OUT DEVICE, OS TYPE, MODULE TYPE FROM THE SUB-HEADER IN MAIN MEMORY

S133 — DISPLAY DEVICE, OS TYPE, MODULE TYPE

S134 — VOLUME SELECTED ? — NO

YES

S135 — DIRECTORY LIST PRESENT ? — NO

YES

S136 — READ OUT DIRECTORY LIST FROM THE OPTION AREA OF SUB-HEADER

S137 — DISPLAY DIRECTORY LIST

END

**F I G. 22**

CHECK DISPLAY PROCESSING

S141 — READ OUT SUB-HEADER OF CURRENTLY SELECTED MODULE, FROM MAIN MEMORY

S142 — READ OUT ADDRESS AND SIZE OF DATA IN OPTICAL DISK, FROM THE SUB-HEADER

S143 — TRANSFER DATA ADDRESS AND SIZE TO OPTICAL DISK R/W PROCESSING MODULE, AND STORES PROCESSING RESULT INTO PAGE MEMORY

S144 — DISPLAY DATA

END

**F I G. 23**

FIG. 24

EP 0 311 807 A2

GENERAL FILE OUTPUT

NUMBER OF MODULE : 2

| MODULE NO. | TYPE | NAME | OPTION FLAG |
|---|---|---|---|
| 1 | GENERAL | DATA 1. TEXT | |
| 2 | GENERAL | DATA 2. TEXT | |
| 3 | | | |
| 4 | | | |
| 5 | | | |
| 6 | | | |
| 7 | | | |

⇓

MODULE SELECT

⇓

· DEVICE : FD 5.25 / FD 3.5     VOLUME · MEASURING
                                NAME   · DATA

· OS TYPE : OS1 / OS3 / OS5

· MODULE · { GENERAL FILE
  TYPE ·   VOLUME : DIRECTORY LIST  YES / NO

⇧  ⇩  CHECK DISPLAY

| FILE NAME CHANGE | FD WRITE-IN EXECUTION | END |

F I G. 25

GENERAL FILE OUTPUT

NUMBER OF MODULE : 1

| MODULE NO. | TYPE | NAME | OPTION FLAG |
|---|---|---|---|
| 1 | VOLUME | SYSTEM DISK | DIRECTORY LIST |
| 2 | | | |
| 3 | | | |
| 4 | | | |
| 5 | | | |
| 6 | | | |
| 7 | | | |

⇩

MODULE SELECT

⇩

·DEVICE : FD5.25 / FD3.5    VOLUME . SYSTEM
                           NAME    · DISK

·OS TYPE : OS1 /OS3 /OS5

. MODULE . { GENERAL FILE
· TYPE  ·   VOLUME :DIRECTORY LIST  YES / NO

COMMAND.COM 12000 1987/01/10 ⇧
BASIC. COM    8000 1987/01/10

CHECK DISPLAY

⇩

FD WRITE-IN EXECUTION    END

F I G. 26

START

S171 — SELECT SPECIFIC APPLICATION FILE

S172 — SEARCH RELATED FILES

S173 — INTENDED FILE FOUND ? —NO→ GIVE ERROR DISPLAY, E.G., FD EXCHANGE S174

YES

S175 — NEED HIGH SPEED DISPLAY FILE ?

YES (IMAGE) → TRANSFORM THE DATA INTO IMAGE DATA S180

NO

YES (HIGH SPEED DRAWING) → GENERATE HIGH SPEED DRAWING DATA S181

FORM THE HEADER OF RELATED FILE — S176

MERGE RELATED FILES — S177

WRITE IT INTO OPTICAL DISK — S178

OUTPUT SELECTED FILE NAME, PROPERTY DATA, IDENTIFYING FLAGS TO FILING PROCESSING MODULE — S179

END

F I G. 27

SPECIFIC FILE SELECT

·DEVICE : FD5.25 / FD 3.5    VOLUME · SYSTEM
                            NAME    · DISK

·SUPPORT FILE : CAD_A / CAD_B / CAD_C

.HIGH SPEED  ·HIGH SPEED    / IMAGE / NOT
DISPLAY DATA  ·DRAWING DATA    DATA / USED

```
DRAWING   1
DRAWING   2          ⇧
DRAWING   3
CIRCUIT _ A    ⇨ CHECK DISPLAY ⇨
CIRCUIT _ B
                     ⇩
```

END

F I G. 28

SPECIFIC FILE SELECT

·DEVICE : FD5.25 / FD3.5     VOLUME . SYSTEM
                              NAME   · DISK

·SUPPORT FILE : CAD_A / CAD_B / CAD_C

.HIGH SPEED  ·HIGH SPEED   / IMAGE / NOT
DISPLAY DATA ·DRAWING DATA   DATA    USED

DRAWING 1
DRAWING 2
DRAWING 3
CIRCUIT_A
CIRCUIT_B

⇧

ERROR

NET FILE DRG.3.NET OF DRG.3
IS NOT FOUND IN FLOPPY DISK,
AND CHANGE IT WITH A NEW
ONE

CHECK

F I G. 29

SPECIFIC FILE SELECT

· DEVICE : ┃FD5.25┃ / FD3.5      VOLUME · SYSTEM
                                 NAME   · DISK

· SUPPORT FILE : ┃CAD_A┃ / CAD_B / CAD_C

· HIGH SPEED    · ┃HIGH SPEED    ┃ / IMAGE / NOT
  DISPLAY DATA  ·  ┃DRAWING DATA ┃   DATA    USED

F I G. 30

ORIGINAL DATA

WRITE IN

19

COMPARISON

READ DATA

READ OUT

14

F I G. 31

HIGH PERFORMANCE INTERFACE

WRITE IN

17

19

ORIGINAL DATA

14

READ OUT

COMPARISON

F I G. 32

DISK

27a

WRITE IN

19

ORIGINAL DATA

EX OR

READ OUT

14

CHECK

F I G. 33

EP 0 311 807 A2

```
                    ┌──────────────┐
                    │    START     │
                    └──────┬───────┘
                           │
              ┌────────────────────────────┐
              │ CHECK IF APPLICATION       │──── S191
              │ SOFTWARE  IS INSTALLED     │
              └────────────┬───────────────┘
                           │
                           ▼                          NO              S193
    S192 ──────◇ INSTALLED ?  ◇──────────────────────────┐
                           │                    ┌─────────────────────┐
                           │ YES                │ SELECT EXECUTE      │
                           ▼                    │ OR STOP OF THE      │
    S194 ──────┌──────────────┐                 │ PROCESSING          │
               │  EXPAND      │                 │ FORCIBLY EXECUTE    │
               │  FILE        │                 └───────┬─────────────┘
               └──────┬───────┘                         │
                      │                        ┌────────┴──────┐
                      │                        ▼               │
                      │                  ┌──────────┐   TO GENERAL
                      │                  │   END    │   FILE OUTPUT
                      │                  └──────────┘   PROCESSING
    (IMAGE)     S195  ▼
      YES  ──────◇ HIGH SPEED         ◇────── YES (HIGH SPEED
               DISPLAY DATA PRESENT?            DRAWING)
    S196                  │ NO                         S197
      ┌──────────┐  S198  ▼                    ┌──────────────┐
      │ DO IMAGE │  ┌──────────────┐           │ EXPAND HIGH  │
      │ DISPLAY  │  │ EXPAND       │           │ SPEED IMAGE  │
      └────┬─────┘  │ NORMAL IMAGE │           └──────┬───────┘
           │        └──────┬───────┘                  │
           └───────────────┼──────────────────────────┘
                           ▼
              ┌────────────────────────┐
              │  CHECK BY OPERATOR     │──── S199
              └────────────┬───────────┘
                           ▼
              ┌────────────────────────┐
              │  OUTPUT IT TO          │──── S200
              │  APPLICATION FILE      │
              └────────────┬───────────┘
                           ▼
    S201 ──────◇ FORMAT SUITABLE ? ◇────── NO      S202
                           │                 ┌─────────────────────┐
                           │ YES             │ EXECUTE ERROR       │
                           ▼                 │ PROCESSING, E.G.,   │
                     ┌──────────┐            │ FD EXCHANGE         │
                     │   END    │            └─────────────────────┘
                     └──────────┘
```

# F I G. 34

EP 0 311 807 A2

ERROR

APPLICATION
PROCESSING MODULE
IS NOT INSTALLED

STOP  EXECUTE

F I G. 35

SPECIFIC FILE OUTPUT

·DEVICE :  FD5.25  / FD 3.5

SUPPORT SYSTEM : CAD_A

DRAWING  3. WORK
DRAWING  3. NET
DRAWING  3. PLOTTER

END

F I G. 36

ADDITIONALLY REGISTER
FOREIGN CHARACTERS ?

YES   NO

CHECK

F I G. 37

**FIG. 38**

```
          ┌──────────┐
          │  START   │
          └────┬─────┘
               │
        ╱──────┴──────╲
S211   ╱    NEXT       ╲      NO
      ⟨  OR PRECEDING   ⟩───────────┐
       ╲  PAGE KEY     ╱            │
        ╲  PUSHED ?   ╱             │
         ╲─────┬─────╱              │
               │ YES                │
S212  ┌────────┴─────────┐          │
      │ READ OUT RECORD  │          │
      │ ADDRESS ATTACHED │          │
      │ TO RETRIEVAL DATA│          │
      └────────┬─────────┘          │
               │                    │
S213  ┌────────┴─────────┐          │
      │ READ OUT DATA AT │          │
      │ THAT ADDRESS FROM│          │
      │ OPTICAL DISK     │          │
      └────────┬─────────┘          │
               │                    │
S214      ┌────┴─────┐               │
         ╱ DISPLAY    ╲              │
         ╲    IT      ╱              │
          └────┬─────┘               │
               │◀───────────────────┘
          ┌────┴─────┐
          │   END    │
          └──────────┘
```

**FIG. 39**

```
          ┌──────────┐
          │  START   │
          └────┬─────┘
               │
        ╱──────┴──────╲
S221   ╱    NEXT       ╲      NO
      ⟨  OR PRECEDING   ⟩───────────┐
       ╲ TEXT PAGE KEY ╱            │
        ╲  PUSHED ?   ╱             │
         ╲─────┬─────╱              │
               │ YES                │
        ╱──────┴──────╲             │
S222   ╱               ╲     NO     │
      ⟨    DOCUMENT     ⟩───────────┤
       ╲ DATA PRESENT  ╱            │
        ╲      ?      ╱             │
         ╲─────┬─────╱              │
               │ YES                │
S223  ┌────────┴─────────┐          │
      │ UPDATE DISPLAY   │          │
      │ POSITION OF PAGE │          │
      │ MEMORY STORED DATA│         │
      └────────┬─────────┘          │
               │                    │
S224      ┌────┴─────┐               │
         ╱ DISPLAY    ╲              │
         ╲    IT      ╱              │
          └────┬─────┘               │
               │◀───────────────────┘
          ┌────┴─────┐
          │   END    │
          └──────────┘
```